(19) **Europäisches Patentamt**
**European Patent Office**
**Office européen des brevets**

(11) **EP 4 618 225 A1**

(12) **EUROPEAN PATENT APPLICATION**
published in accordance with Art. 153(4) EPC

(43) Date of publication:
**17.09.2025 Bulletin 2025/38**

(21) Application number: **23937307.9**

(22) Date of filing: **14.12.2023**

(51) International Patent Classification (IPC):
**H01M 10/0585** (2010.01)   **H01M 10/0525** (2010.01)

(52) Cooperative Patent Classification (CPC):
Y02E 60/10; Y02P 70/50

(86) International application number:
**PCT/CN2023/138668**

(87) International publication number:
**WO 2024/234636 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.05.2023  CN 202310534595**

(71) Applicant: **Contemporary Amperex Technology
Co., Limited
Ningde, Fujian 352100 (CN)**

(72) Inventor: **WANG, Xitong
Ningde, Fujian 352100 (CN)**

(74) Representative: **Ziebig Hengelhaupt Intellectual
Property Attorneys
Patentanwaltskanzlei PartGmbB
Leipziger Straße 49
10117 Berlin (DE)**

(54) **LAMINATION METHOD FOR ELECTRODE SHEET, MANUFACTURING METHOD FOR BATTERY CELL, AND BATTERY CELL**

(57)    Provided in embodiments of the present application are a lamination method for an electrode sheet, a manufacturing method for a battery cell, a battery cell, a battery, and an electrical device. The lamination method for an electrode sheet comprises: connecting a first end of each of a plurality of first sheets to a first fixing member; connecting a first end of each of a plurality of second sheets to a second fixing member; oppositely and fixedly configuring the first fixing members and the second fixing members; and sequentially arranging second ends of the plurality of first sheets and second ends of the plurality second sheets, and staggeredly stacking the plurality of first sheets and the plurality of second sheets. **In** the technical solution provided by the present application, instead of a conventional Z-shaped lamination method, sheets are stacked by means of directly arranging a plurality of first sheets and a plurality of second sheets such that the plurality of first sheets and the plurality of second sheets are stacked on one another. Corner cracking and damage due to folding do not occur in the first sheets and the second sheets, thus the use performance of an electrode assembly and a battery in which the electrode assembly is located can be improved.

300

| |
|---|
| Connect first ends of a plurality of first electrode plates to a first fixing member |
| Connect first ends of a plurality of second electrode plates to a second fixing member |
| Oppositely and fixedly arrange the first fixing member and the second fixing member |
| Stack the plurality of first electrode plates and the plurality of second electrode plates in a staggered manner by sequentially placing second ends of the plurality of first electrode plates and second ends of the plurality of second electrode plates |

S310
S320
S330
S340

FIG. 4

## Description

### CROSS-REFERENCE TO RELATED APPLICATION

The present application claims priority to Chinese Patent Application 202310534595.8 filed on May 12, 2023 and entitled "METHOD FOR STACKING ELECTRODE PLATES, METHOD FOR MANUFACTURING BATTERY CELL, AND BATTERY CELL", the content of which is incorporated herein by reference in its entirety.

### TECHNICAL FIELD

Embodiments of the present application relate to the technical field of batteries, and in particular, to a method for stacking electrode plates, a method for manufacturing a battery cell, and a battery cell.

### BACKGROUND

With the development of the times, electric vehicles boast great market potential due to their high environmental friendliness, low noise, low operating costs, and other advantages, and can effectively promote energy conservation and emission reduction, contributing to the development and progress of society. For the electric vehicles, a battery technology is a crucial factor in their development.

In the development of the battery technology, the manufacturing performance of a battery is closely related to the product performance of the battery, and how to improve the manufacturing performance of the battery to optimize the product performance of the battery is a technical problem to be solved urgently.

### SUMMARY

Embodiments of the present application provide a method for stacking electrode plates, a method for manufacturing a battery cell, a battery cell, a battery, and an electric device, which can improve the product performance of the battery.

In a first aspect, a method for stacking electrode plates is provided, and includes: connecting first ends of a plurality of first electrode plates to a first fixing member; connecting first ends of a plurality of second electrode plates to a second fixing member; oppositely and fixedly arranging the first fixing member and the second fixing member; and stacking the plurality of first electrode plates and the plurality of second electrode plates in a staggered manner by sequentially placing second ends of the plurality of first electrode plates and second ends of the plurality of second electrode plates.

In the technical solution provided by the present application, instead of a conventional Z-shaped stacking method, the electrode plates are stacked by means of directly arranging the plurality of first electrode plates and the plurality of second electrode plates such that the plurality of first electrode plates and the plurality of second electrode plates are stacked mutually. Corner cracking and damage due to folding do not occur in the first electrode plates and the second electrode plates, thereby improving the use performance of an electrode assembly and a battery in which the electrode assembly is located. Because the risk of corner cracking of the electrode plates does not need to be worried, thinner base materials can be used for the electrode plates, the energy density of a battery cell in which the electrode plates are located can be improved, and the cost of the base materials of the electrode plates is reduced. Furthermore, in the process of placing the plurality of first electrode plates and the plurality of second electrode plates, the first ends of the plurality of first electrode plates are connected to the first fixing member, the first ends of the plurality of second electrode plates are connected to the second fixing member, and the first fixing member and the second fixing member are oppositely and fixedly arranged, such that the first ends of the plurality of first electrode plates and the first ends of the plurality of second electrode plates are oppositely fixed. In this case, the second ends of the plurality of first electrode plates and the second ends of the plurality of second electrode plates are placed, and dislocation between the plurality of first electrode plates and the plurality of second electrode plates can be reduced, such that the stacking of the plurality of first electrode plates and the plurality of second electrode plates has high position precision, which is conducive to reducing an electrode plate redundant area caused by the deviation of the electrode plates, thereby reducing areas of the plurality of first electrode plates and the plurality of second electrode plates, and improving the energy density and the overall performance of the battery cell in which the electrode assembly is located.

In some possible implementations, stacking the plurality of first electrode plates and the plurality of second electrode plates in the staggered manner by sequentially placing the second ends of the plurality of first electrode plates and the second ends of the plurality of second electrode plates, includes: clamping the second ends of the plurality of first electrode plates and the second ends of the plurality of second electrode plates; and sequentially releasing the second ends of the plurality of first electrode plates and the second ends of the plurality of second electrode plates so as to stack the plurality of first electrode plates and the plurality of second electrode plates in the staggered manner.

Through the technical solution of the implementations, the effect of stacking the plurality of first electrode plates and the plurality of second electrode plates is achieved by clamping and releasing the second ends of the plurality of first electrode plates and the second ends of the plurality of second electrode plates, and the overall implementation mode is simple and can effectively ensure orderly stacking of the plurality of first electrode plates and the plurality of second electrode plates, which is conducive to improving the manufacturing performance and the use performance of the electrode assembly.

In some possible implementations, the method for stacking the electrode plates further includes: acquiring the plurality of stacked first electrode plates, where the first ends of the plurality of first electrode plates are flush, and a surface on which the first end of each of the plurality of first electrode plates is located is a first empty foil region not coated with a first active material; and connecting the first ends of the plurality of first electrode plates to the first fixing member, includes: integrally connecting the first ends of the plurality of first electrode plates to the first fixing member.

Through the technical solution of the implementations, the first ends of the plurality of first electrode plates may be connected to and fixed on the first fixing member reliably, an implementation mode is simple, and operation efficiency is high, which is conducive to further improving the production efficiency of the electrode assembly and the battery cell.

In some possible implementations, the method for stacking the electrode plates further includes: cutting the first empty foil regions of the plurality of first electrode plates to form tabs of the plurality of first electrode plates; and integrally connecting the first ends of the plurality of first electrode plates to the first fixing member includes: integrally connecting the tabs of the plurality of first electrode plates to the first fixing member.

Through the technical solution of the implementations, the tabs may be formed on the plurality of first electrode plates, such that the tabs can be flexibly connected to an end cover of the battery cell through a current collecting member, which is conducive to the flexible application of the electrode assembly in different battery cells, and enlarging application scenarios of the electrode assembly.

In some possible implementations, a surface on which the second end of each of the plurality of first electrode plates is located is an insulating region coated with an insulating material.

Through the technical solution of the implementations, after the plurality of first electrode plates and the plurality of second electrode plates are stacked mutually, the insulating regions in the first electrode plates can be used for insulating the first electrode plates from the second electrode plates, and the risk of short circuit between the first electrode plates and the second electrode plates is reduced, which is conducive to improving the operation reliability of the electrode assembly and the battery cell.

In some possible implementations, the method for stacking the electrode plates further includes: acquiring a plurality of stacked first electrode plate groups, where each of the plurality of first electrode plate groups includes two first electrode plates which are adjacently arranged, first ends of the two first electrode plates are located on a middle region of each first electrode plate group, and the middle region is a first empty foil region not coated with a first active material; and connecting the first ends of the plurality of first electrode plates to the first fixing member includes: integrally connecting the middle regions of the plurality of first electrode plate groups to the first fixing member.

Through the technical solution of the implementations, the plurality of stacked electrode plate groups may be acquired, each of the plurality of electrode plate groups includes the two connected electrode plates, the middle region of each electrode plate group is the empty foil region not coated with the first active material, and connection and fixation between the plurality of electrode plates and the fixing member can be rapidly achieved by integrally connecting the middle regions of the plurality of stacked electrode plate groups to the fixing member, thereby being conducive to improving the manufacturing efficiency of the electrode assembly and the battery cell.

In some possible implementations, second ends of the two first electrode plates in each first electrode plate group are located on two end regions of the first electrode plate group, and the two end regions are insulating regions coated with an insulating material.

Through the technical solution of the implementations, after the plurality of first electrode plates and the plurality of second electrode plates are stacked mutually, the insulating regions in the first electrode plate groups can be used for insulating the first electrode plates from the second electrode plates, and the risk of short circuit between the first electrode plates and the second electrode plates is reduced, which is conducive to improving the operation reliability of the electrode assembly and the battery cell.

In some possible implementations, a width of the middle region of at least one of the plurality of first electrode plate groups is greater than a width of the first fixing member.

Through the technical solution of the implementations, the width of the middle region of at least part of the plurality of first electrode plate groups is greater than the width of the first fixing member, for example, in a welding process, the width of the middle region of the first electrode plate group in the plurality of first electrode plate groups that is most distal to the first fixing member is greater than the width of the first fixing member, such that the welding effect between the plurality of first electrode plate groups and the first fixing member can be improved, and the use reliability of the electrode assembly and the battery cell is improved.

In some possible implementations, the method for stacking the electrode plates further includes: acquiring the plurality of stacked second electrode plates, where the first ends of the plurality of second electrode plates are flush, and a surface on which the first end of each of the plurality of second electrode plates is located is a second empty foil region not coated with a second active material; and connecting the first ends of the plurality of second electrode plates to the second fixing member includes: integrally connecting the first ends of the plurality of second electrode plates to the second fixing member.

Through the technical solution of the implementations, the first ends of the plurality of second electrode plates may be connected to and fixed on the second fixing member reliably, an implementation mode is simple, and operation efficiency is high, which is conducive to further improving the production efficiency of the electrode assembly and the battery cell.

In some possible implementations, the method for stacking the electrode plates further includes: cutting the second empty foil regions of the plurality of second electrode plates to form tabs of the plurality of second electrode plates; and integrally connecting the first ends of the plurality of second electrode plates to the second fixing member includes: integrally connecting the tabs of the plurality of second electrode plates to the second fixing member.

Through the technical solution of the implementations, the tabs may be formed on the plurality of second electrode plates, such that the tabs can be flexibly connected to an end cover of the battery cell through a current collecting member, which is conducive to the flexible application of the electrode assembly in different battery cells, and enlarging application scenarios of the electrode assembly.

In some possible implementations, the method for stacking the electrode plates further includes: acquiring a plurality of stacked second electrode plate groups, where each of the plurality of second electrode plate groups includes two second electrode plates which are adjacently arranged, first ends of the two second electrode plates are located on a middle region of each second electrode plate group, and the middle region is a second empty foil region not coated with a second active material; and connecting the first ends of the plurality of second electrode plates to the second fixing member includes: integrally connecting the middle regions of the plurality of second electrode plate groups to the second fixing member.

Through the technical solution of the implementations, the plurality of stacked electrode plate groups may be acquired, each of the plurality of electrode plate groups includes the two connected electrode plates, the middle region of each electrode plate group is the empty foil region not coated with the first active material, and connection and fixation between the plurality of electrode plates and the fixing member can be rapidly achieved by integrally connecting the middle regions of the plurality of stacked electrode plate groups to the fixing member, thereby being conducive to improving the manufacturing efficiency of the electrode assembly and the battery cell.

In some possible implementations, second ends of the two second electrode plates in each second electrode plate group are located on two end regions of the second electrode plate group, and the two end regions are third empty foil regions not coated with a second active material.

In some possible implementations, a width of the middle region of at least one of the plurality of second electrode plate groups is greater than a width of the second fixing member.

Through the technical solution of the implementations, the widths of the middle regions of at least part of the plurality of second electrode plate groups are greater than the width of the second fixing member, for example, in a welding process, the width of the middle region of the second electrode plate group in the plurality of second electrode plate groups that is most distal to the second fixing member is greater than the width of the second fixing member, such that the welding effect between the plurality of second electrode plate groups and the second fixing member can be improved, and the use reliability of the electrode assembly and the battery cell is improved.

In some possible implementations, the method for stacking the electrode plates further includes: acquiring a plurality of separators; and stacking the plurality of first electrode plates and the plurality of second electrode plates in the staggered manner by sequentially placing the second ends of the plurality of first electrode plates and the second ends of the plurality of second electrode plates includes: stacking the plurality of first electrode plates, the plurality of second electrode plates, and the plurality of separators in a staggered manner by sequentially placing the second ends of the plurality of first electrode plates, the second ends of the plurality of second electrode plates, and the plurality of separators.

Through the technical solution of the implementations, the plurality of separators can be isolated between first electrode plates and second electrode plates to form the electrode assembly with stable performance in the battery cell. In addition, the separators also do not need to be subjected to Z-shaped folding, which can reduce the fracture risk of the separators, and further improve the operation performance of the electrode assembly and the battery cell.

In some possible implementations, the first fixing member includes a first cover plate applied to a battery cell, and the first ends of the plurality of first electrode plates are connected to a first electrode terminal of the first cover plate; and/or, the second fixing member includes a second cover plate applied to the battery cell, and the first ends of the plurality of second electrode plates are connected to a second electrode terminal of the second cover plate.

Through the technical solution of the implementations, in a case that the first fixing member and the second fixing member are cover plates of the battery cell, the plurality of first electrode plates and the plurality of second electrode plates may be directly connected to the cover plates of the battery cell, the first electrode plates and the second electrode plates do not need to be subjected to tab cutting, and are connected to the cover plates not through the current collecting members. Therefore, the problem of dislocation of the tabs of the plurality of electrode plates generated in a production process of a traditional battery cell can be eliminated, thereby eliminating the problems of large area of welding regions, redundant weight of the tabs, redundant size of the current collecting members, or the like caused by dislocation of the tabs, being conducive to reducing the area of the welding regions of the first electrode plates and the second electrode plates that are welded on the cover plates, and accordingly further reducing the area of the first electrode plates and the area of the second electrode plates, and improving the energy density and the overall performance of the battery cell in which the electrode assembly is located.

In some possible implementations, the first cover plate is further provided with a first pressure relief mechanism, and a plurality of first electrode terminals on the first cover plate are respectively disposed on both sides of the first pressure relief mechanism; and/or, the second cover plate is further provided with a second pressure relief mechanism, and a plurality of second electrode terminals on the second cover plate are respectively disposed on both sides of the second pressure relief mechanism.

Through the technical solution of the implementations, the first cover plate and/or the second cover plate are/is provided with the plurality of electrode terminals and the pressure relief mechanism/the pressure relief mechanisms, and while high-temperature and highpressure emissions inside the battery cell are discharged through the pressure relief mechanisms, and the possibility of blasting of the battery cell is reduced, each electrode terminal of the plurality of electrode terminals may be connected to the plurality of electrode plates respectively, which is conducive to forming a plurality of separable electrode assemblies in the battery cell, achieves flexible connection of the battery cell, and is conducive to improving the comprehensive performance of the battery cell.

In some possible implementations, the first fixing member includes a first current collecting member applied to the battery cell, and the first ends of the plurality of first electrode plates are connected to the first current collecting member; and/or, the second fixing member includes a second current collecting member applied to the battery cell, and the first ends of the plurality of second electrode plates are connected to the second current collecting member.

Through the technical solution of the implementations, the end covers of the battery cell and the plurality of electrode plates are connected through the current collecting members, which is conducive to the flexible application of the electrode assembly in different battery cells, and enlarging application scenarios of the electrode assembly.

In some possible implementations, a difference between a length of each first electrode plate and a length of each second electrode plate is greater than or equal to 0.1 mm; and/or, a difference between a width of each first electrode plate and a width of each second electrode plate is greater than or equal to 0.1 mm.

Through the technical solution of the implementations, in a case that the first electrode plates and the second electrode plates are stacked mutually, the first electrode plates may wrap the second electrode plates in a stacking direction, such that a large corresponding area is formed between the first electrode plates and the second electrode plates, which is conducive to improving the electrical performance of the battery cell.

In some possible implementations, the difference between the length of each first electrode plate and the length of each second electrode plate is greater than or equal to 0.5 mm and less than or equal to 1 mm; and/or, the difference between the width of each first electrode plate and the width of each second electrode plate is greater than or equal to 0.5 mm and less than or equal to 1 mm.

In the technical solution of the implementations, the first electrode plates may wrap the second electrode plates in the stacking direction, thereby improving the electrical performance of the battery cell. At the same time, the size of the first electrode plates is not too large, thereby reducing unnecessary space waste of the first electrode plates in the battery cell and improving the energy density of the battery cell.

In some possible implementations, a quantity of the first electrode plates is greater than or equal to 10; and/or, a quantity of the second electrode plates is greater than or equal to 10.

Through the technical solution of the implementations, the battery cell may have sufficient first electrode plates and second electrode plates to generate large energy, such that the energy density and the use performance of the battery cell are improved.

In a second aspect, a method for manufacturing a battery cell is provided, and includes: the method for stacking the electrode plates according to the first aspect or any one possible implementation of the first aspect; hot-pressing a plurality of stacked first electrode plates and second electrode plates to form an electrical assembly, where the electrical assembly includes a first fixing member, the plurality of first electrode plates, the plurality of second electrode plates, and a second fixing member which are connected; acquiring a housing; and accommodating the electrical assembly into the housing.

In the technical solution provided by the embodiment of the present application, since the stacking of the plurality of first electrode plates and the plurality of second electrode plates in the battery cell has high precision, high manufacturing efficiency, and high quality and performance, the battery cell manufactured by the embodiment of the present application also has high manufacturing efficiency and high quality and performance.

In some possible implementations, the housing includes a foldable housing; and accommodating the electrical assembly into the housing includes: folding the foldable housing according to a shape of the electrical assembly, such that a three-dimensional hollow housing is formed on the foldable housing and wraps at least part of a surface of the electrical assembly.

Through the technical solution of the implementations, after the plurality of first electrode plates and the plurality of second electrode plates are stacked, the electrical assembly formed by the plurality of first electrode plates and the plurality of second electrode plates can be kept in place, and the foldable housing wraps and is folded around the electrical assembly, such that the three-dimensional hollow housing accommodating the electrical assembly is formed. In the implementations, a one-stop manufacturing of the battery cell can be achieved, thereby reducing the problems possibly generated in a moving process of the electrical assembly, and being conducive to further improving the manufacturing efficiency and the use performance of the battery cell.

In some possible implementations, the three-dimensional hollow housing includes two openings disposed opposite to each other, the first fixing member in the electrical assembly includes a first cover plate of the battery cell, and the second fixing member in the electrical assembly includes a second cover plate of the battery cell; and the method for manufacturing the battery cell further includes: connecting the first cover plate to one opening of the three-dimensional hollow housing; and connecting the second cover plate to the other opening of the three-dimensional hollow housing.

Through the technical solution of the implementations, in a case that the first fixing member and the second fixing member in the electrical assembly include the first cover plate and the second cover plate, the two end openings of the three-dimensional hollow housing are directly lidded with the first fixing member and the second fixing member to form the closed housing of the battery cell. The technical solution is easy to achieve and low in manufacturing cost, which is conducive to further improving the machining efficiency of the battery cell and reducing the manufacturing cost.

In some possible implementations, the housing includes the three-dimensional hollow housing, and the three-dimensional hollow housing includes two openings disposed opposite to each other; and accommodating the electrical assembly into the housing includes: accommodating the electrical assembly into the three-dimensional hollow housing through any one of the two openings.

Through the technical solution of the implementations, the electrical assembly formed by the plurality of first electrode plates, the plurality of second electrode plates, the first fixing member, and the second fixing member can be conveniently accommodated and mounted into the three-dimensional hollow housing, thereby being conducive to improving the production and manufacturing efficiency of the battery cell.

In some possible implementations, the first fixing member in the electrical assembly includes a first current collecting member of the battery cell, and the second fixing member in the electrical assembly includes a second current collecting member of the battery cell; and the method for manufacturing the battery cell further includes: connecting the first current collecting member to a first cover plate of the battery cell, and lidding one opening of the two openings with the first cover plate; and connecting the second current collecting member to a second cover plate of the battery cell, and lidding the other opening of the two openings with the second cover plate.

The battery cell manufactured by the implementations may simultaneously include the first current collecting member, the second current collecting member, the first cover plate, and the second cover plate, where the first current collecting member and the second current collecting member may be used as the first fixing member and the second fixing member to stack the plurality of first electrode plates and the plurality of second electrode plates, the first cover plate and the second cover plate are respectively connected to the first current collecting member and the second current collecting member, and the two openings of the three-dimensional hollow housing are lidded with the first cover plate and the second cover plate, such that a battery cell with stable and reliable performance is formed.

In some possible implementations, hot-pressing the plurality of stacked first electrode plates and second electrode plates to form the electrical assembly includes: hot-pressing the plurality of stacked first electrode plates, second electrode plates, and separators to form the electrical assembly, where a sum of thicknesses of the plurality of hot-pressed first electrode plates, second electrode plates, and separators is less than or equal to a width of the first fixing member and/or the second fixing member.

Through the technical solution of the embodiment, the electrical assembly formed by the plurality of first electrode plates, the plurality of second electrode plates, the plurality of separators, the first fixing member, and the second fixing member can be easily mounted and accommodated into the housing of the battery cell, thereby being conducive to further improving the manufacturing efficiency and the product performance of the battery cell.

In some possible implementations, a ratio of the sum D of the thicknesses of the plurality of hot-pressed first electrode plates, second electrode plates, and separators to the width W of the first fixing member and/or the second fixing member satisfies: $0.9 \leq D/W \leq 1$.

Through the technical solution of the implementations, the sum of the thicknesses of the plurality of first electrode plates and the plurality of second electrode plates and the width of the first fixing member and/or the second fixing member can be controlled within a suitable proportion range, which is conducive to mounting the electrical assembly in the battery cell, also does not cause the waste of space in the housing, and can comprehensively improve the manufacturing efficiency and energy density of the battery cell.

In a third aspect, a battery cell is provided, and includes: a housing, provided with a first opening and a second opening which are opposite to each other; an electrode assembly, accommodated in the housing, the electrode assembly including a plurality of first electrode plates and a plurality of second electrode plates which are stacked and separated; a first cover plate, lidding the first opening, the first cover plate being provided with a first electrode terminal, and the first electrode terminal being connected to the plurality of first electrode plates; and a second cover plate, lidding the second opening, the second cover plate being provided with a second electrode terminal, and the second electrode terminal being connected to the plurality of second electrode plates.

Through the technical solution of the embodiment of the present application, the electrode assembly of the battery cell includes the plurality of first electrode plates and the plurality of second electrode plates which are stacked and separated, and corner cracking and damage due to folding do not occur in the first electrode plates and the second electrode plates, thereby improving the use performance of the electrode assembly and the battery cell in which the electrode assembly is located. Because the risk of corner cracking of the electrode plates does not need to be worried, thinner base materials can be used for the electrode plates, the energy density of the battery in which the electrode plates are located can be improved, and the cost of the base materials of the electrode plates is reduced.

In some possible implementations, at least one of the plurality of first electrode plates includes a first empty foil region, the first empty foil region is connected to the first electrode terminal, and a width of the first empty foil region is greater than or equal to a width of the first cover plate; and/or, at least one of the plurality of second electrode plates includes a second empty foil region, the second empty foil region is connected to the second electrode terminal, and a width of the second empty foil region is greater than or equal to a width of the second cover plate.

In some possible implementations, a ratio of the width W1 of the first empty foil region of the at least one first electrode plate to the width W2 of the first cover plate satisfies: $1 < W1/W2 \leq 1.4$; and/or, a ratio of the width W3 of the second empty foil region of the at least one second electrode plate to the width W4 of the second cover plate satisfies: $1 < W3/W4 \leq 1.4$.

In some possible implementations, the plurality of first electrode plates and the plurality of second electrode plates are stacked in a width direction of the first cover plate and/or the second cover plate.

In some possible implementations, the electrode assembly further includes a plurality of separators, disposed between the first electrode plates and the second electrode plates adjacent to each other, and a ratio of a sum D of thicknesses of the plurality of stacked first electrode plates, second electrode plates, and separators to the width W of the first cover plate and/or the second cover plate satisfies: $0.9 \leq D/W \leq 1$.

In some possible implementations, a difference between a length of each first electrode plate and a length of each second electrode plate is greater than or equal to 0.1 mm; and/or, a difference between a width of each first electrode plate and a width of each second electrode plate is greater than or equal to 0.1 mm.

In some possible implementations, the difference between the length of each first electrode plate and the length of each second electrode plate is greater than or equal to 0.5 mm and less than or equal to 1 mm; and/or, the difference between the width of each first electrode plate and the width of each second electrode plate is greater than or equal to 0.5 mm and less than or equal to 1 mm.

In a fourth aspect, a battery is provided, and includes: a case; and the battery cell according to the third aspect or any one possible implementation of the third aspect, the battery cell being accommodated in the case.

In a fifth aspect, an electric device is provided, and includes: the battery according to the fourth aspect, the battery being configured to supply electric energy to the electric device.

In the technical solution provided by the present application, instead of a conventional Z-shaped stacking method, the electrode plates are stacked by means of directly arranging the plurality of first electrode plates and the plurality of second electrode plates such that the plurality of first electrode plates and the plurality of second electrode plates are stacked mutually. Corner cracking and damage due to folding do not occur in the first electrode plates and the second electrode plates, thereby improving the use performance of the electrode assembly and the battery in which the electrode assembly is located. Because the risk of corner cracking of the electrode plates does not need to be worried, thinner base materials can be used for the electrode plates, the energy density of the battery in which the electrode plates are located can be improved, and the cost of the base materials of the electrode plates is reduced. Furthermore, in the process of placing the plurality of first electrode plates and the plurality of second electrode plates, the first ends of the plurality of first electrode plates are connected to the first fixing member, the first ends of the plurality of second electrode plates are connected to the second fixing member, and the first fixing member and the second fixing member are oppositely and fixedly arranged, such that the first ends of the plurality of first electrode plates and the first ends of the plurality of second electrode plates are oppositely fixed. In this case, the second ends of the plurality of first electrode plates and the second ends of the plurality of second electrode plates are placed, and dislocation between the plurality of first electrode plates and the plurality of second electrode plates can be reduced, such that the stacking of the plurality of first electrode plates and the plurality of second electrode plates has high position precision, which is conducive to reducing an electrode plate redundant area caused by the deviation of the electrode plates, thereby reducing areas of the plurality of first electrode plates and the plurality of second electrode plates, and improving the energy density and the overall performance of the battery cell in which the electrode assembly is located.

BRIEF DESCRIPTION OF THE DRAWINGS

To more clearly illustrate the technical solutions in embodiments of the present application, the accompanying drawings required for illustrating the embodiments of the present application are briefly described below. Apparently, the accompanying drawings in the following description illustrate merely some embodiments of the present application, and those of ordinary skills in the art may still derive other accompanying drawings from these accompanying drawings without creative efforts.

FIG. 1 is a schematic structural diagram of a battery according to an embodiment of the present application;

FIG. 2 is a schematic structural diagram of a battery cell according to an embodiment of the present application;

FIG. 3 is a schematic cross-sectional diagram of an electrode assembly according to an embodiment of the present application;

FIG. 4 is a schematic flowchart block diagram of a method for stacking electrode plates according to an embodiment of the present application;

FIG. 5 is a schematic structural diagram corresponding to step S310 shown in FIG. 4;

FIG. 6 is a schematic structural diagram corresponding to step S320 shown in FIG. 4;

FIG. 7 is a schematic structural diagram corresponding to step S330 and step S340 shown in FIG. 4;

FIG. 8 is a schematic flowchart block diagram of another method for stacking electrode plates according to an embodiment of the present application;

FIG. 9 is a schematic structural diagram corresponding to step S410 shown in FIG. 8;

FIG. 10 is a schematic structural diagram corresponding to step S420 shown in FIG. 8;

FIG. 11 is a schematic structural diagram corresponding to step S430 shown in FIG. 8;

FIG. 12 is a schematic flowchart block diagram of another method for stacking electrode plates according to an embodiment of the present application;

FIG. 13 is a schematic flowchart block diagram of another method for stacking electrode plates according to an embodiment of the present application;

FIG. 14 is a schematic structural diagram corresponding to step S610 shown in FIG. 13;

FIG. 15 is a schematic structural diagram corresponding to step S620 shown in FIG. 13;

FIG. 16 is a schematic structural diagram corresponding to step S630 shown in FIG. 13;

FIG. 17 is a schematic flowchart block diagram of another method for stacking electrode plates according to an embodiment of the present application;

FIG. 18 is a schematic structural diagram corresponding to step S750 shown in FIG. 17;

FIG. 19 is a schematic structural diagram of an electrical assembly according to an embodiment of the present application;

FIG. 20 is a schematic structural diagram of two types of first fixing members or second fixing members according to an embodiment of the present application;

FIG. 21 is a schematic flowchart block diagram of a method for manufacturing a battery cell according to an embodiment of the present application;

FIG. 22 is a schematic structural diagram corresponding to step S840 shown in FIG. 21;

FIG. 23 is another schematic structural diagram corresponding to step S840 shown in FIG. 21; and

FIG. 24 is a schematic structural diagram of a battery cell according to an embodiment of the present application.

The accompanying drawings are not drawn to scale.

DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus shall not be construed as limitations to the present application. Furthermore, the terms "first", "second", "third", and the like are used for descriptive purposes only and shall not be construed as indicating or implying relative importance. The "perpendicular" is not strictly perpendicular but is within the allowable range of error. The "parallel" is not strictly parallel but is within the allowable range of error.

The following description is given with the directional terms as illustrated in the drawings and is not intended to limit the specific structure of the present application. In the description of the present application, it should further be noted that unless otherwise explicitly specified or defined, the terms "mount", "connect", and "link" shall be construed broadly and may be, for example, fixed connection, detachable connection, or integral connection, or direct connection or indirect connection via an intermediate. For those of ordinary skills in the art, the specific meaning of the above terms in the present application may be interpreted according to the specific condition.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

Unless otherwise defined, all technical and scientific terms used in the present application have the same meaning as commonly understood by those of ordinary skills in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the described embodiments of the present application can be combined with other embodiments.

In the field of new energy, the importance of batteries as a main power source of electric devices, such as electric vehicles, ships, or spacecraft is self-evident. In the present application, a battery refers to a single physical module that includes one or more battery cells to provide higher voltage and capacity. The battery generally includes a case used for packaging one or more battery cells. The case can reduce the influence of liquid or other foreign matters on charging or discharging of the battery cells. Optionally, the battery referred to in the present application may be referred to as a battery pack.

Optionally, the battery cells may include lithium-ion secondary batteries, lithium-ion primary batteries, lithium-sulfur batteries, sodium-lithium-ion batteries, sodium-ion batteries, magnesium-ion batteries, or the like, which is not limited in the embodiments of the present application. The battery cell may be cylindrical, flat, rectangular parallelepiped-shaped, or in other shapes, which is also not limited in the embodiments of the present application. According to the packaging method, the battery cells are typically divided into three types: cylindrical battery cells, square battery cells, and pouch battery cells, which is not limited in the embodiments of the present application.

In the development of a battery technology, various design factors need to be considered at the same time, for example, in order to improve the charging and discharging performance of the battery, various performance parameters, such as energy density, cycle life, discharging capacity, charging and discharging rate, and the like of the battery need to be considered. In addition, the manufacturing efficiency and the manufacturing performance of the battery are also important to the popularization, application, and long-term development of the battery.

In a battery manufacturing technology, the manufacturing of an electrode assembly in the battery is an important process. The electrode assembly consists of a positive electrode plate, a negative electrode plate, and a separator, and the separator is disposed between the positive electrode plate and the negative electrode plate. The battery cell primarily works by the movement of metal ions between the positive electrode plate and the negative electrode plate. The positive electrode plate includes a positive electrode current collector and a positive electrode active substance layer. The surface of the positive electrode current collector is coated with the positive electrode active substance layer. The current collector not coated with the positive electrode active substance layer protrudes from the current collector coated with the positive electrode active substance layer. The current collector not coated with the positive electrode active substance layer serves as a positive electrode tab. Taking lithium-ion batteries as an example, a material of the positive electrode current collector may be aluminum, and a positive electrode active substance may be lithium cobaltate, lithium iron phosphate, ternary lithium, lithium manganate, or the like. The negative electrode plate includes a negative electrode current collector and a negative electrode active substance layer. The surface of the negative electrode current collector is coated with the negative electrode active substance layer. The current collector not coated with the negative electrode active substance layer protrudes from the current collector coated with the negative electrode active substance layer. The current collector not coated with the negative electrode active substance layer serves as a negative electrode tab. The material of the negative electrode current collector may be copper, and a negative electrode active substance may be carbon, silicon, or the like. To ensure the passing of a large current without fusing, there are a plurality of positive electrode tabs that are stacked together, and there are a plurality of negative electrode tabs that are stacked together. The material of the separator may be polypropylene (PP), polyethylene (PE), or the like.

For the manufacture of the electrode assembly, two main categories of techniques are currently mainstream, namely, a winding type and a stacking type. For the manufacture of the stacked electrode assembly, a Z-shaped stacking technology is mostly used currently. Specifically, the separator and/or the electrode plates are folded in a Z shape and then stacked in a stacked structure. The speed of manufacturing the electrode assembly by using the stacking method is low, such that the problems of large device quantity demand, large occupied area, high acquisition cost, high later maintenance cost, high energy consumption, and the like are caused. In addition, when the separator is subjected to Z-shaped stacking, separator wrinkles are very easily generated due to tension variation of the separator and the like, and the battery is short-circuited due to the separator wrinkles, thereby causing safety problems. When the electrode plates are stacked in a Z shape, the risk of cracking exists in extreme acute angle folding regions of the electrode plates in the stacking hot-pressing process.

In view of this, the present application provides a method for stacking electrode plates. The method for stacking the electrode plates includes: connecting first ends of a plurality of first electrode plates to a first fixing member; connecting first ends of a plurality of second electrode plates to a second fixing member; oppositely and fixedly arranging the first fixing member and the second fixing member; and stacking the plurality of first electrode plates and the plurality of second electrode plates by placing second ends of the plurality of first electrode plates and second ends of the plurality of second electrode plates.

In the technical solution provided by the present application, instead of a conventional Z-shaped stacking method, the electrode plates are stacked by means of directly arranging the plurality of first electrode plates and the plurality of second electrode plates such that the plurality of first electrode plates and the plurality of second electrode plates are stacked mutually. Corner cracking and damage due to folding do not occur in the first electrode plates and the second electrode plates, thereby improving the use performance of the electrode assembly and the battery in which the electrode assembly is located. Because the risk of corner cracking of the electrode plates does not need to be worried, thinner base materials can be used for the electrode plates, the energy density of the battery in which the electrode plates are located can be improved, and the cost of the base materials of the electrode plates is reduced. Furthermore, in the process of placing the plurality of first electrode plates and the plurality of second electrode plates, the first ends of the plurality of first electrode plates are connected to the first fixing member, the first ends of the plurality of second electrode plates are connected to the second fixing member, and the first fixing member and the second fixing member are oppositely and fixedly arranged, such that the first ends of the plurality of first electrode plates and the first ends of the plurality of second electrode plates are oppositely fixed. In this case, the second ends of the plurality of first electrode plates and the second ends of the plurality of second electrode plates are placed, and dislocation between the plurality of first electrode plates and the plurality of second electrode plates can be reduced, such that the stacking of the plurality of first electrode plates and the plurality of second electrode plates has high position precision, which is conducive to reducing an electrode plate redundant area caused by the deviation of the electrode plates, thereby reducing areas of the plurality of first electrode plates and the plurality of second electrode plates, and improving the energy density and the overall performance of the battery cell in which the electrode assembly is located.

The technical solutions described in the embodiments of the present application are applicable to various apparatuses that use batteries, such as electric vehicles, electric bicycles, electric tools, ships, and spacecraft, where the spacecraft includes an airplane, a rocket, a space shuttle, a spaceship, and the like. It is to be understood that the technical solutions described in the embodiments of the present application are not limited to the apparatuses described above, but are applicable to all apparatuses that use batteries.

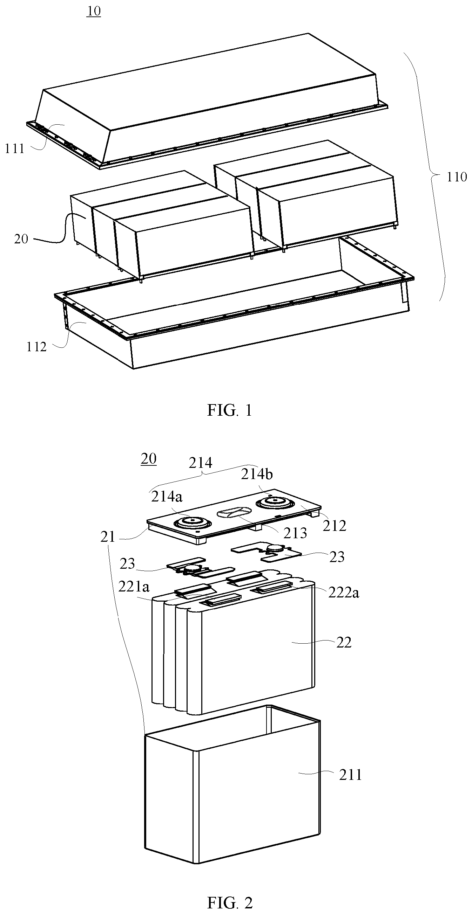

FIG. 1 is a schematic structural diagram of a battery 10 according to an embodiment of the present application.

As shown in FIG. 1, the battery 10 may include a plurality of battery cells 20. In addition, the battery 10 may further include a case 110 (or referred to as a cover), the interior of the case 110 is a hollow structure, and the plurality of battery cells 20 are accommodated in the case 110. As shown in FIG. 1, the case 110 may include two parts, herein referred to as a first part 111 and a second part 112, respectively, and the first part 111 and the second part 112 are snap-fitted together. The shapes of the first part 111 and the second part 112 may be determined based on the combination shape of the plurality of battery cells 20, and the first part 111 and the second part 112 may each be provided with one opening. For example, the first part 111 and the second part 112 may each be a hollow rectangular parallelepiped, each having only one open face. The opening of the first part 111 and the opening of the second part 112 may be disposed opposite to each other, and the first part 111 and the second part 112 are snap-fitted together to form the case 110 with an enclosed chamber. The plurality of battery cells 20, after being connected in parallel, in series, or in series-parallel, are disposed inside the case 110 formed after the first part 111 and the second part 112 are snap-fitted together.

Optionally, the battery 10 may further include other structures, which are not described in detail herein. For example, the battery 10 may further include a busbar component, and the busbar component is configured to achieve electrical connection among the plurality of battery cells 20, such as in parallel, in series, or in series-parallel connection. Specifically, the busbar component may achieve electrical connection among the battery cells 20 by connecting to electrode terminals of the battery cells 20. Further, the busbar component may be fixed to the electrode terminals of the battery cells 20 by welding. The electrical energy of the plurality of battery cells 20 can be further conducted through a conductive mechanism passing through the case. Optionally, the conductive mechanism may also belong to the busbar component.

Based on different power requirements, the quantity of the battery cells 20 may be set to any numerical value. The plurality of battery cells 20 may be connected in series, in parallel, or in series-parallel to achieve a higher capacity or power, where series-parallel connection refers to a mixture of series connection and parallel connection. In some implementations, since the quantity of the battery cells 20 included in each battery 10 may be relatively large, the battery cells 20 may also be arranged in groups for ease of mounting, with each group of the battery cells 20 forming a battery module. The quantity of the battery cells 20 included in the battery module is not limited and may be set as required. Alternatively, in other implementations, the plurality of battery cells 20 may also be directly packaged in the case 110 to form the battery 10, and the plurality of battery cells 20 may be integrally bonded to each other by, for example, a heat insulating adhesive.

Optionally, in the embodiment shown in FIG. 1, the case 110 in the battery 10 may further be a cover having an opening, in addition to a closed cover whose interior is hollow, for example, the case 110 may not include an upper cover. The plurality of battery cells 20 in the battery 10 may be directly bonded to structural members of an electric device by an adhesive. In the case that the electric device is a vehicle, the plurality of battery cells 20 may be directly bonded to a vehicle body (e.g., a chassis) of the vehicle by an adhesive, and in this embodiment, the vehicle body may be understood as a vehicle in which an upper cover of the battery 10 is integrated.

FIG. 2 is a schematic structural diagram of a battery cell 20 according to an embodiment of the present application.

As shown in FIG. 2, the battery cell 20 includes one or more electrode assemblies 22, a housing 211, and a cover plate 212. The housing 211 and the cover plate 212 form a shell 21 or a battery box of the battery cell 20. The housing 211 is determined according to the shape of one or more electrode assemblies 22 after combination, for example, the housing 211 may be a hollow rectangular parallelepiped, or a cube, or a cylinder, and one of the faces of the housing 211 is provided with an opening such that one or more electrode assemblies 22 can be placed in the housing 211. For example, when the housing 211 is a hollow rectangular parallelepiped or a cube, one of the planes of the housing 211 is an open plane, that is, the plane has no wall body such that the inside and the outside of the housing 211 communicate with each other. When the housing 211 is a hollow cylinder, an end surface of the housing 211 is an open plane, that is, the end surface has no wall body such that the inside and the outside of the housing 211 communicate with each other. The cover plate 212 covers the opening and is connected to the housing 211 to form a closed cavity in which the electrode assembly 22 is placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in the shape of a flat plate, the two electrode terminals 214 are fixed to the flat surface of the cover plate 212, and the two electrode terminals 214 are a positive electrode terminal 214a and a negative electrode terminal 214b, respectively. One connecting member 23, which may also be referred to as a current collecting member 23, is disposed at each of the electrode terminals 214, and the connecting member is located between the cover plate 212 and the electrode assembly 22 and configured to electrically connect the electrode assembly 22 to the electrode terminals 214.

As shown in FIG. 2, each electrode assembly 22 is provided with a first tab 221a and a second tab 222a. The first tab 221a and the second tab 222a have opposite polarities. For example, when the first tab 221a is a positive electrode tab, the second tab 222a is a negative electrode tab. The first tab 221a of one or more electrode assemblies 22 is connected to one electrode terminal by one connecting member 23, and the second tab 222a of one or more electrode assemblies 22 is connected to another electrode terminal by another connecting member 23. For example, the positive electrode terminal 214a is connected to the positive electrode tab by the connecting member 23, and the negative electrode terminal 214b is connected to the negative electrode tab by another connecting member 23.

With continued reference to FIG. 2, a pressure relief mechanism 213 may also be provided on one wall of the battery cell 20, and the pressure relief mechanism 213 is configured to release the internal pressure or reduce the internal temperature when the internal pressure or temperature of the battery cell 20 reaches a threshold. In some implementations, the pressure relief mechanism 213 may be located on the same wall as the electrode terminals 214 of the battery cell 20, or, in other implementations, the pressure relief mechanism 213 may be located on a different wall from the electrode terminals 214 of the battery cell 20.

Optionally, the pressure relief mechanism 213 may be a part of a first wall 21a, or may be a split-type structure from the first wall 21a and fixed to the first wall 21a by welding, for example. When too much gas generated by the battery cell 20 raises the internal pressure of the housing 211 to reach the threshold or heat generated by the internal reaction of the battery cell 20 raises the internal temperature of the battery cell 20 to reach the threshold, the pressure relief mechanism 213 may rupture at the notch to cause the inside and the outside of the housing 211 to communicate with each other, and the gas pressure and the temperature are released outwards by the rupture of the pressure relief mechanism 213, thereby preventing the battery cell 20 from exploding.

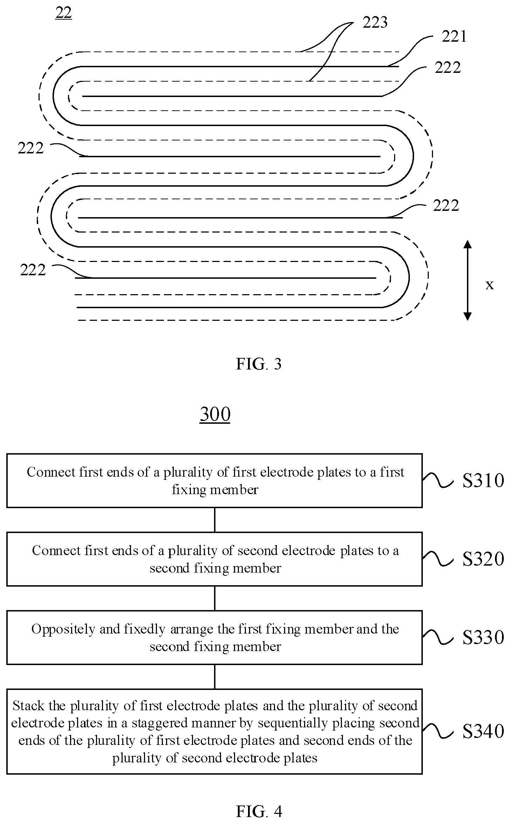

FIG. 3 is a schematic cross-sectional diagram of an electrode assembly 22 according to an embodiment of the present application.

As shown in FIG. 3, the electrode assembly 22 includes a first electrode plate 221, separators 223, and second electrode plates 222, where the first electrode plate 221 and the separators 223 are each of a continuous structure and have a long size, and the second electrode plates 222 are small in size and plural in quantity. The first electrode plate 221 and the two layers of separators 223 are stacked together, and the two layers of separators 223 are respectively disposed on the upper and lower surfaces of the first electrode plate 221. The first electrode plate 221 and the two layers of separators 223 are folded in a Z shape, and one layer of second electrode plate 222 is disposed between two adjacent layers of separators 223 in a stacking direction x. Through the implementation, the first electrode plate 221, the separators 223, and the second electrode plates 222 are sequentially stacked in the stacking direction x, thereby forming the electrode assembly 22.

In the technical solution of the implementation, the first electrode plate 221 and the separators 223 are all folded, extreme acute angles are formed on folded regions, and a risk of cracking exists, which is not conducive to the use reliability and the service life of the electrode assembly 22, and further affects the overall performance of the battery cell 20 and the battery 10 in which the battery cell is located.

In view of this, FIG. 4 is a schematic flowchart block diagram of a method 300 for stacking electrode plates according to an embodiment of the present application, which can solve the problem that the folded regions of the electrode plates have a risk of cracking in the foregoing technical solution.

As shown in FIG. 4, the method 300 for stacking the electrode plates includes the following steps.

In S310, first ends of a plurality of first electrode plates are connected to a first fixing member.

In S320, first ends of a plurality of second electrode plates are connected to a second fixing member.

In S330, the first fixing member and the second fixing member are oppositely and fixedly arranged.

In S340, the plurality of first electrode plates and the plurality of second electrode plates are stacked in a staggered manner by sequentially placing second ends of the plurality of first electrode plates and second ends of the plurality of second electrode plates.

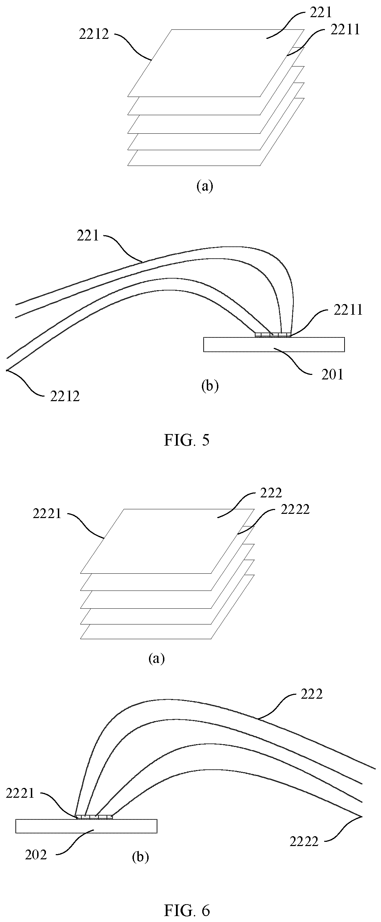

For convenience of explanation and understanding, FIG. 5 is a schematic structural diagram corresponding to step S310 shown in FIG. 4.

Referring to (a) of FIG. 5, in step S310, the plurality of first electrode plates 221 are stacked, the first ends 2211 of the first electrode plates 221 may be any ends of the first electrode plates 221 in an extending direction thereof, and the second ends 2212 of the first electrode plates 221 are the other ends of the first electrode plates 221 opposite to the first ends 2211.

As an example, in the case that the plurality of first electrode plates 221 are polygonal electrode plates (e.g., quadrangular electrode plates) with the same size, the first ends 2211 and the second ends 2212 of the first electrode plates 221 are any two opposite sides of the polygonal electrode plates.

Referring to (b) of FIG. 5, the first ends 2211 of the plurality of first electrode plates 221 are connected to the first fixing member 201. The second ends 2212 of the plurality of first electrode plates 221 are in a freely fanned-out state. In some implementations, the first ends 2211 of the plurality of first electrode plates 221 may be fixedly connected to the first fixing member 201 by welding.

The first fixing member 201 is intended to be configured to be fixedly connected to the first ends 2211 of the plurality of first electrode plates 221, and the first fixing member 201 is fixedly arranged in the process of stacking the electrode plates. As an example, the first fixing member 201 may be a cover plate (or may also be referred to as an end cover) configured to form a shell of the battery cell 20. As another example, the first fixing member 201 may also be a connecting member configured to being connected to the plurality of first electrode plates 221, and the connecting member may be configured to collect a current of the plurality of first electrode plates 221, and thus, in some implementations, the connecting member may also be referred to as a current collecting member.

FIG. 6 is a schematic structural diagram corresponding to step S320 shown in FIG. 4.

Similar to the embodiment shown in FIG. 5, referring to (a) of FIG. 6, in step S320, the plurality of second electrode plates 222 are stacked, the first ends 2221 of the second electrode plates 222 may be any ends of the first electrode plates 221 in an extending direction thereof, and the second ends 2222 of the second electrode plates 222 are the other ends of the second electrode plates 222 opposite to the first ends 2221.

Referring to (b) of FIG. 6, the first ends 2221 of the plurality of second electrode plates 222 are connected to the second fixing member 202. The second ends 2222 of the plurality of second electrode plates 222 are in a freely fanned-out state. In some implementations, the first ends 2221 of the plurality of second electrode plates 222 may be fixedly connected to the second fixing member 202 by welding.

Specifically, in the embodiment of the present application, the plurality of first electrode plates 221 and the plurality of second electrode plates 222 may be two types of electrode plates with opposite polarities in the battery cell 20, for example, in the case that the first electrode plates 221 are positive electrode plates, the second electrode plates 222 are negative electrode plates.

Optionally, similar to the above first fixing member 201, in an example, the second fixing member 202 may also be a cover plate (or may also be referred to as an end cover) configured to form the shell of the battery cell 20. In the implementation, the first fixing member 201 and the second fixing member 202 may be two cover plates disposed opposite to each other in the shell of the battery cell 20. As another example, the second fixing member 202 may also be a current collecting member configured to be connected to the plurality of second electrode plates 222.

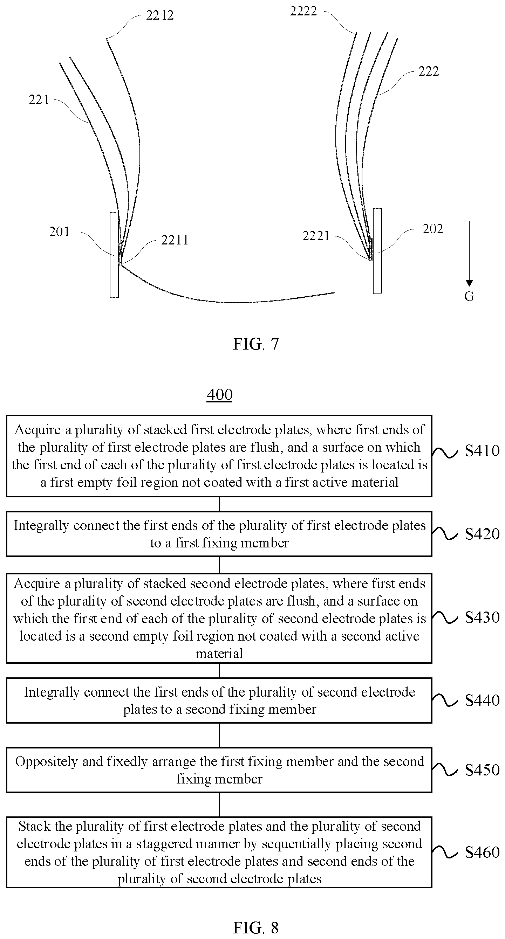

FIG. 7 is a schematic structural diagram corresponding to step S330 and step S340 shown in FIG. 4.

As shown in FIG. 7, in step S330, the first fixing member 201 connected to the plurality of first electrode plates 221 and the second fixing member 202 connected to the plurality of second electrode plates 222 are disposed opposite to each other, and a certain interval is provided between the first fixing member 201 and the second fixing member 202. The relative position between the first fixing member 201 and the second fixing member 202 is fixed, such that the plurality of first electrode plates 221 and the plurality of second electrode plates 222 are stacked between the first fixing member and the second fixing member.

In step S340, in the case that the first ends 2211 of the first electrode plates 221 and the first ends 2221 of the second electrode plates 222 are connected to the first fixing member 201 and the second fixing member 202, the plurality of first electrode plates 221 and the plurality of second electrode plates 222 are stacked in a staggered manner by sequentially placing the second ends 2212 of the plurality of first electrode plates 221 and the second ends 2222 of the plurality of second electrode plates 222.

In the technical solution provided by the present application, instead of a conventional Z-shaped stacking method, the electrode plates are stacked by means of directly arranging the plurality of first electrode plates 221 and the plurality of second electrode plates 222 such that the plurality of first electrode plates 221 and the plurality of second electrode plates 222 are stacked mutually. Corner cracking and damage due to folding do not occur in the first electrode plates 221 and the second electrode plates 222, thereby improving the use performance of the electrode assembly 22 and the battery in which the electrode assembly is located. Because the risk of corner cracking of the electrode plates does not need to be worried, thinner base materials can be used for the electrode plates, the energy density of the battery in which the electrode plates are located can be improved, and the cost of the base materials of the electrode plates is reduced. Furthermore, in the process of placing the plurality of first electrode plates 221 and the plurality of second electrode plates 222, the first ends 2211 of the plurality of first electrode plates 221 are connected to the first fixing member 201, the first ends 2221 of the plurality of second electrode plates 222 are connected to the second fixing member 202, and the first fixing member 201 and the second fixing member 202 are oppositely and fixedly arranged, such that the first ends 2211 of the plurality of first electrode plates 221 and the first ends 2221 of the plurality of second electrode plates 222 are oppositely fixed. In this case, the second ends 2212 of the plurality of first electrode plates 221 and the second ends 2222 of the plurality of second electrode plates 222 are placed, and dislocation between the plurality of first electrode plates 221 and the plurality of second electrode plates 222 can be reduced, such that the stacking of the plurality of first electrode plates 221 and the plurality of second electrode plates 222 has high position precision, which is conducive to reducing an electrode plate redundant area caused by the deviation of the electrode plates, thereby reducing areas of the plurality of first electrode plates 221 and the plurality of second electrode plates 222, and improving the energy density and the overall performance of the battery cell 20 in which the electrode assembly 22 is located.

In some implementations, step S340 above may include: the second ends 2212 of the plurality of first electrode plates 221 and the second ends 2222 of the plurality of second electrode plates 222 are clamped; and the second ends 2212 of the plurality of first electrode plates 221 and the second ends 2222 of the plurality of second electrode plates 222 are sequentially released so as to stack the plurality of first electrode plates 221 and the plurality of second electrode plates 222 in the staggered manner.

Specifically, the implementations provide a technical solution for placing the second ends 2212 of the plurality of first electrode plates 221 and the second ends 2222 of the plurality of second electrode plates 222. In the implementations, the second ends 2212 of the plurality of first electrode plates 221 may be clamped by a first clamping apparatus, and the first clamping apparatus may release the second ends 2212 of the first electrode plates 221 when the second ends 2212 of the first electrode plates 221 need to be placed. Similarly, the second ends 2222 of the plurality of second electrode plates 222 may be clamped by a second clamping apparatus, and the second clamping apparatus may release the second ends 2222 of the second electrode plates 222 when the second ends 2222 of the second electrode plates 222 need to be placed.

Optionally, the quantity of the first clamping apparatus and the quantity of the second clamping apparatus may be one or more. For example, two first clamping apparatuses are clamped at two corners of the second ends 2212 of the plurality of first electrode plates 221, respectively, and/or, two second clamping apparatuses are clamped at two corners of the second ends 2222 of the plurality of second electrode plates 222, respectively.

Through the technical solution of the implementations, the effect of stacking the plurality of first electrode plates 221 and the plurality of second electrode plates 222 is achieved by clamping and sequentially releasing the second ends 2212 of the plurality of first electrode plates 221 and the second ends 2222 of the plurality of second electrode plates 222, and the overall implementation mode is simple and can effectively ensure orderly and staggered stacking of the plurality of first electrode plates 221 and the plurality of second electrode plates 222, which is conducive to improving the manufacturing performance and the use performance of the electrode assembly 22.

In some implementations, after the second ends 2212 of the plurality of first electrode plates 221 and the second ends 2222 of the plurality of second electrode plates 222 are clamped, the second ends 2212 of the plurality of first electrode plates 221 and the second ends 2222 of the plurality of second electrode plates 222 can be placed in preset positions by a traction apparatus.

Alternatively, in other implementations, the second ends 2212 of the plurality of first electrode plates 221 may be clamped in a direction of the first fixing member 201 opposite to a gravity direction; the second ends 2222 of the plurality of second electrode plates 222 are clamped in a direction of the second fixing member 202 opposite to a gravity direction; and the second ends 2212 of the plurality of first electrode plates 221 and the second ends 2222 of the plurality of second electrode plates 222 are released, such that the second ends 2212 of the plurality of first electrode plates 221 and the second ends 2222 of the plurality of second electrode plates 222 are stacked under the action of gravity.

Optionally, as shown in FIG. 7, G is a gravity direction, the first clamping apparatus (not shown in FIG. 7) clamps the second ends 2212 of the plurality of first electrode plates 221 in the direction of the first fixing member 201 opposite to the gravity direction, and the second clamping apparatus (not shown in FIG. 7) clamps the second ends 2222 of the plurality of second electrode plates 222 in the direction of the second fixing member 202 opposite to the gravity direction.

The first clamping apparatus may sequentially release the second ends 2212 of the plurality of first electrode plates 221, such that the second ends 2212 of the plurality of first electrode plates 221 descend under the action of gravity to reach a first preset position between the first fixing member 201 and the second fixing member 202. Similarly, the second clamping apparatus may sequentially release the second ends 2222 of the plurality of second electrode plates 222, such that the second ends 2222 of the plurality of second electrode plates 222 descend under the action of gravity to reach a second preset position between the first fixing member 201 and the second fixing member 202.

Through the technical solution of the implementations, the second ends 2212 of the plurality of first electrode plates 221 and the second ends 2222 of the plurality of second electrode plates 222 may be sequentially placed under the action of gravity, such that the stacking of the plurality of first electrode plates 221 and the plurality of second electrode plates 222 is achieved, the overall implementation mode is more simplified and has higher reliability, and the implementation can achieve the stacking of the electrode plates without too many extra auxiliary devices, which is conducive to further improving the manufacturing efficiency of the electrode assembly 22 and the battery cell 20.

FIG. 8 is a schematic flowchart block diagram of another method 400 for stacking electrode plates according to an embodiment of the present application.

As shown in FIG. 8, the method 400 for stacking the electrode plates includes the following steps.

In S410, a plurality of stacked first electrode plates are acquired, where first ends of the plurality of first electrode plates are flush, and a surface on which the first end of each of the plurality of first electrode plates is located is a first empty foil region not coated with a first active material.

In S420, the first ends of the plurality of first electrode plates are integrally connected to a first fixing member.

In S430, a plurality of stacked second electrode plates are acquired, where first ends of the plurality of second electrode plates are flush, and a surface on which the first end of each first electrode plate of the plurality of second electrode plates is located is a second empty foil region not coated with a second active material.

In S440, the first ends of the plurality of second electrode plates are integrally connected to a second fixing member.

In S450, the first fixing member and the second fixing member are oppositely and fixedly arranged.

In S460, the plurality of first electrode plates and the plurality of second electrode plates are stacked in a staggered manner by sequentially placing second ends of the plurality of first electrode plates and second ends of the plurality of second electrode plates.

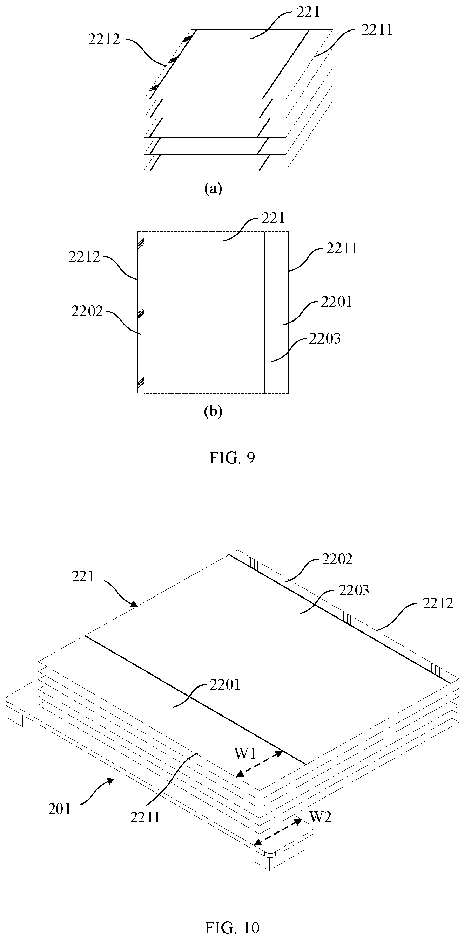

For convenience of explanation and understanding, FIG. 9 is a schematic structural diagram corresponding to step S410 shown in FIG. 8. Figure (a) of FIG. 9 shows a three-dimensional schematic diagram of a plurality of first electrode plates 221, and figure (b) of FIG. 9 shows a plane schematic diagram of the first electrode plate 221.

As shown in (a) of FIG. 9, the first ends 2211 of the plurality of stacked first electrode plates 221 are flush. Optionally, in the case that the plurality of first electrode plates 221 are the same in shape and size, the second ends 2212 of the plurality of first electrode plates 221 are also flush.

As shown in (b) of FIG. 9, the surface on which the first end 2211 of each of the plurality of first electrode plates 221 is located is the first empty foil region 2201 not coated with the first active material. A region of the first electrode plate 221 that is coated with the first active material is shown in the figure as a first active region 2203. It can be understood that, in the case that the first electrode plates 221 are the positive electrode plates of the battery cell 20, the first active material may be a positive electrode active material, such as lithium cobaltate, lithium iron phosphate, ternary lithium, lithium manganate, or the like. In the case that the first electrode plates 221 are the negative electrode plates of the battery cell 20, the first active material may be a negative electrode active material, such as carbon, silicon, or the like.

FIG. 10 is a schematic structural diagram corresponding to step S420 shown in FIG. 8.

As shown in FIG. 10, in step S420, the flush first ends 2211 of the plurality of first electrode plates 221 may be stacked on the first fixing member 201, and a welding device (not shown in FIG. 10) may integrally weld and fix the first ends 2211 of the plurality of first electrode plates 221 to the first fixing member 201. Specifically, the welding device may weld and fix the first empty foil regions 2201 located at the first ends 2211 of the plurality of first electrode plates 221 to the first fixing member 201.

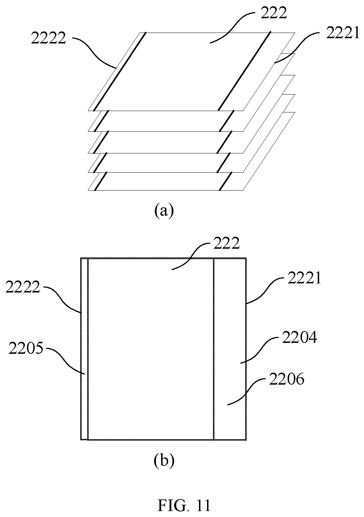

FIG. 11 is a schematic structural diagram corresponding to step S430 shown in FIG. 8. Figure (a) of FIG. 11 shows a three-dimensional schematic diagram of a plurality of second electrode plates 222, and figure (b) of FIG. 11 shows a plane schematic diagram of the second electrode plates 222.

Similar to the plurality of first electrode plates 221 shown in FIG. 9 above, as shown in (a) of FIG. 11, the first ends 2221 of the plurality of stacked second electrode plates 222 are flush. Optionally, in the case that the plurality of second electrode plates 222 are the same in shape and size, the second ends 2222 of the plurality of second electrode plates 222 are also flush.

As shown in (b) of FIG. 11, the surface on which the first end 2221 of each of the plurality of second electrode plates 222 is located is the second empty foil region 2204 not coated with the second active material. A region of the second electrode plate 222 that is coated with a second active material is shown in the figure as a second active region 2206. It can be understood that the second active material may be a positive electrode active material or a negative electrode active material of the battery cell 20. Optionally, in the case that the first active region 2203 and the second active region 2206 are a positive electrode active region and a negative electrode active region, respectively, an area of the positive electrode active region may be greater than that of the negative electrode active region to enable a sufficient chemical reaction therebetween.

Optionally, the implementation mode of step S440 may be similar to the implementation mode shown in FIG. 10 above, that is, the flush first ends 2221 of the plurality of second electrode plates 222 may be stacked on the second fixing member 202, and a welding device may integrally weld and fix the first ends 2221 of the plurality of second electrode plates 222 to the second fixing member 202.

In addition, in the embodiment of the present application, the specific implementation modes of step S450 and step S460 may refer to the related descriptions of the embodiments shown in FIG. 4 and FIG. 7, which are not repeated herein.

Through the technical solution of the embodiment of the present application, the first ends 2211 of the plurality of first electrode plates 221 and the first ends 2221 of the plurality of second electrode plates 222 may be connected to and fixed on the first fixing member 201 and the second fixing member 202 reliably, the implementation mode is simple, and operation efficiency is high, which is conducive to further improving the production efficiency of the electrode assembly 22 and the battery cell 20.

In addition, through the technical solution, in the case that the first fixing member 201 and the second fixing member 202 are cover plates of the battery cell 20, the plurality of first electrode plates 221 and the plurality of second electrode plates 222 may be directly connected to the cover plates of the battery cell 20, the first electrode plates 221 and the second electrode plates 222 do not need to be subjected to tab cutting, and are connected to the cover plates not through the current collecting members. Therefore, the problem of dislocation of the tabs of the plurality of electrode plates generated in a production process of a traditional battery cell can be eliminated, thereby eliminating the problems of large area of welding regions, redundant weight of the tabs, redundant size of the current collecting members, or the like caused by dislocation of the tabs, and thus being conducive to reducing the area of the welding regions of the first electrode plates 221 and the second electrode plates 222 that are welded on the cover plates, and accordingly further reducing the area of the first electrode plates 221 and the area of the second electrode plates 222, and improving the energy density and the overall performance of the battery cell 20 in which the electrode assembly 22 is located.

Optionally, in some implementations of the embodiment of the present application, referring back to FIG. 10, among the plurality of first electrode plates 221 connected to the first fixing member 201, a width W1 of the first empty foil region 2201 of at least one first electrode plate 221 is greater than a width W2 of the first fixing member 201. For example, in the welding process, the width W1 of the first empty foil region 2201 of the first electrode plate 221 of the plurality of first electrode plates 221 that is most distal to the first fixing member 201 is greater than the width W2 of the first fixing member 201.

In some examples, the width of the first empty foil region 2201 of each of the plurality of first electrode plates 221 may be greater than the width of the first fixing member 201.

Alternatively, in some other examples, the widths of the first empty foil regions 2201 of the plurality of first electrode plates 221 decrease sequentially along a stacking direction of the plurality of first electrode plates 221 from top to bottom. The widths of the first empty foil regions 2201 of only a part of the plurality of first electrode plates 221 are greater than the width of the first fixing member 201.

Since the plurality of first electrode plates 221 have a stacking height, when the welding device located above the plurality of first electrode plates 221 welds the plurality of first electrode plates 221, the welding effect between the first electrode plates 221 of the plurality of first electrode plates 221 that are distal to the first fixing member 201 and the first fixing member 201 is poor. In view of this, in order to improve the welding reliability of the first empty foil regions 2201 of the plurality of first electrode plates 221 on the first fixing member 201, the widths of the first empty foil regions 2201 of at least part of the plurality of first electrode plates 221 need to be greater than the width of the first fixing member 201. For example, in the welding process, the width of the first empty foil region 2201 of the first electrode plate 221 of the plurality of first electrode plates 221 that is most distal to the first fixing member 201 is greater than the width of the first fixing member 201, thereby being conducive to improving the welding effect between the plurality of first electrode plates 221 and the first fixing member 201, and improving the use reliability of the electrode assembly 22 and the battery cell 20.

As an example but not limitation, a ratio of the width W1 of the first empty foil region 2201 of the first electrode plate 221 of the plurality of first electrode plates 221 that is most distal to the first fixing member 201 to the width W2 of the first fixing member 201 satisfies:

$$1 < W1/W2 \le 1.4.$$

By designing the ratio of the width W1 of the first empty foil region 2201 to the width W2 of the first fixing member 201, the width W1 of the first empty foil region 2201 can be effectively controlled on the basis of determining the width W2 of the first fixing member 201, such that the width of the first empty foil region 2201 is within a proper range, which not only can improve the welding effect of the first electrode plate 221 and the first fixing member 201, but also can increase the area of the first active region 2203 of the first electrode plate 221 that is coated with the first active material, and improve the comprehensive performance of the electrode assembly 22.

Optionally, continuing to refer to FIG. 10, among the plurality of first electrode plates 221, a length direction of each first empty foil region 2201 may be the same as a length direction of the first fixing member 201, and a length of the first empty foil region 2201 may be less than a length of the first fixing member 201.

It can be understood that, after the plurality of first electrode plates 221 are welded to the first fixing member 201 through the first empty foil regions 2201, a length of a weld mark formed by the plurality of first electrode plates 221 on the first fixing member 201 is less than the length of the first fixing member 201, and a width of the weld mark is also less than the width of the first fixing member 201.

Similar to the above-mentioned welding of the plurality of first electrode plates 221 and the first fixing member 201, in some implementations, among the plurality of second electrode plates 222 connected to the second fixing member 202, a width W3 of the second empty foil region 2204 of the second electrode plate 222 that is most distal to the second fixing member 202 is greater than a width W4 of the second fixing member 202.

In some examples, the width of the second empty foil region 2204 of each of the plurality of second electrode plates 222 may be greater than the width of the second fixing member 202.

Alternatively, in other examples, the widths of the second empty foil regions 2204 of the plurality of second electrode plates 222 decrease sequentially along a stacking direction of the plurality of second electrode plates 222 from top to bottom. The widths of the second empty foil regions 2204 of only a part of the plurality of second electrode plates 222 are greater than the width of the second fixing member 202.

As an example but not limitation, a ratio of the width W3 of the second empty foil region 2204 of the second electrode plate 222 of the plurality of second electrode plates 222 that is most distal to the second fixing member 202 to the width W4 of the second fixing member 202 satisfies: $1 < W3/W4 \le 1.4$.

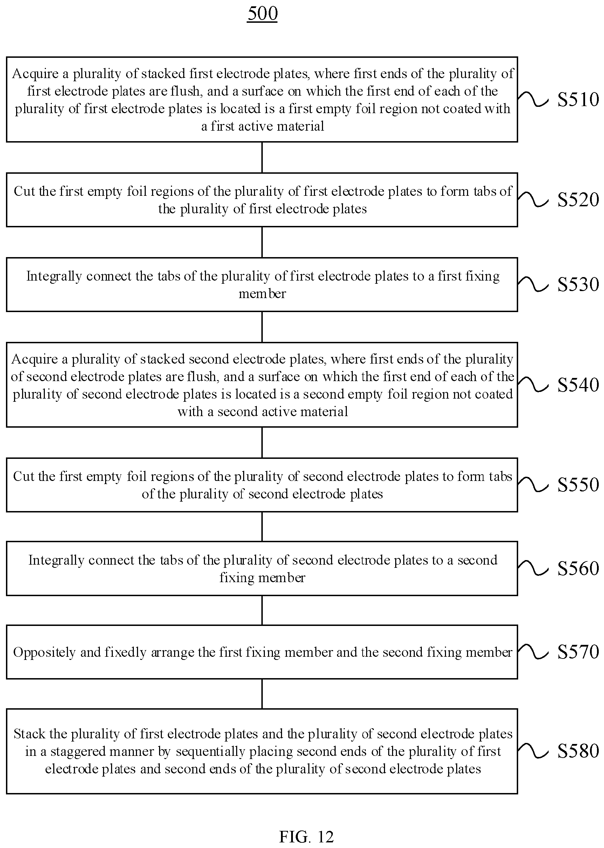

FIG. 12 is a schematic flowchart block diagram of another method 500 for stacking electrode plates according to an embodiment of the present application.

As shown in FIG. 12, the method 500 for stacking the electrode plates includes the following steps.

In S510, a plurality of stacked first electrode plates are acquired, where first ends of the plurality of first electrode plates are flush, and a surface on which the first end of each of the plurality of first electrode plates is located is a first empty foil region not coated with a first active material.

In S520, the first empty foil regions of the plurality of first electrode plates are cut to form tabs of the plurality of first electrode plates.

In S530, the tabs of the plurality of first electrode plates are integrally connected to a first fixing member.

In S540, a plurality of stacked second electrode plates are acquired, where first ends of the plurality of second electrode plates are flush, and a surface on which the first end of each first electrode plate of the plurality of second electrode plates is located is a second empty foil region not coated with a second active material.

In S550, the first empty foil regions of the plurality of second electrode plates are cut to form tabs of the plurality of second electrode plates.

In S560, the tabs of the plurality of second electrode plates are integrally connected to a second fixing member.

In S570, the first fixing member and the second fixing member are oppositely and fixedly arranged.

In S580, the plurality of first electrode plates and the plurality of second electrode plates are stacked in a staggered manner by sequentially placing second ends of the plurality of first electrode plates and second ends of the plurality of second electrode plates.

In step S510 and step S520, as a possible implementation mode, the plurality of stacked first electrode plates 221 may be acquired first, and the first empty foil regions 2201 of the plurality of first electrode plates 221 are stacked mutually. The first empty foil regions 2201 of the plurality of stacked first electrode plates 221 may be cut by a cutting apparatus to form mutually stacked tabs of the plurality of first electrode plates 221.

As another possible implementation mode, before the plurality of first electrode plates 221 are stacked, a first sheet structure in a strip shape is formed by the plurality of first electrode plates 221, a middle region of the first sheet structure along a width direction of the first sheet structure may be coated with a first active material, an end region may be an empty foil region, and the empty foil region may be cut to form a plurality of tabs. After the first sheet structure is cut along a length direction of the first sheet structure, a plurality of first electrode plates 221 may be formed, tabs are formed on the first empty foil region 2201 of each first electrode plate 221, and after the plurality of first electrode plates 221 are stacked, the tabs of the plurality of first electrode plates 221 are also stacked.

In step S530, the flush tabs of the plurality of first electrode plates 221 may be stacked on the first fixing member 201, and the tabs of the plurality of first electrode plates 221 may be integrally welded to the first fixing member 201 by a welding device.

It can be understood that, the schematic diagram of step S530 above and the welding connection of the first fixing member 201 may refer to FIG. 10, where the difference is only that tabs are formed on the first empty foil regions 2201 of the plurality of first electrode plates 221 that are located at the first ends 2211 in the embodiment of the present application.

The processing mode of the plurality of second electrode plates 222 in step S540 to step S560 is similar to the processing mode of the plurality of first electrode plates 221 in step S510 to step S530, and the specific implementation mode may refer to the above related description, and for brevity, the details will not be repeated herein.

In addition, in the embodiment of the present application, the specific implementation modes of step S570 to step S580 may also refer to the related descriptions of the embodiments shown in FIG. 4 and FIG. 7, which are not repeated herein.

Through the technical solution of the embodiment of the present application, the tabs may also be formed on the plurality of first electrode plates 221 and the plurality of second electrode plates 222, such that the tabs can be flexibly connected to the end covers of the battery cell 20 through current collecting members, which is conducive to the flexible application of the electrode assembly 22 in different battery cells 20, and enlarging application scenarios of the electrode assembly 22.

It can be understood that, in the case that the tabs are formed on the plurality of first electrode plates 221 and the plurality of second electrode plates 222, the first fixing member 201 and the second fixing member 202 may be the current collecting members. After the plurality of first electrode plates 221 are fixedly connected to a first current collecting member and the plurality of second electrode plates 222 are fixedly connected to a second current collecting member, the two current collecting members are oppositely and fixedly arranged, and the plurality of first electrode plates 221 and the plurality of second electrode plates 222 may be stacked together to form an electrode assembly 22 with a stable structure.

Optionally, in some implementations, a surface on which the second end 2212 of each of the plurality of first electrode plates 221 is located is an insulating region 2202 coated with an insulating material, and a surface on which the second end 2222 of each of the plurality of second electrode plates 222 is a third empty foil region 2205.

Specifically, in the implementations, the first empty foil region 2201 in which the first end 2211 of the first electrode plate 221 is located is connected to the first fixing member 201, and a region in which the second end 2212 of the first electrode plate 221 is located is the insulating region 2202. In addition, the second empty foil region 2204 in which the first end 2221 of the second electrode plate 222 is located is connected to the second fixing member 202, and a region in which the second end 2222 of the second electrode plate 222 is located may also be an empty foil region. After the plurality of first electrode plates 221 and the plurality of second electrode plates 222 are stacked mutually, the insulating regions 2202 in the first electrode plates 221 can be used for insulating the first electrode plates 221 from the second electrode plates 222, and the risk of short circuit between the first electrode plates 221 and the second electrode plates 222 is reduced, which is conducive to improving the operation reliability of the electrode assembly 22 and the battery cell 20.

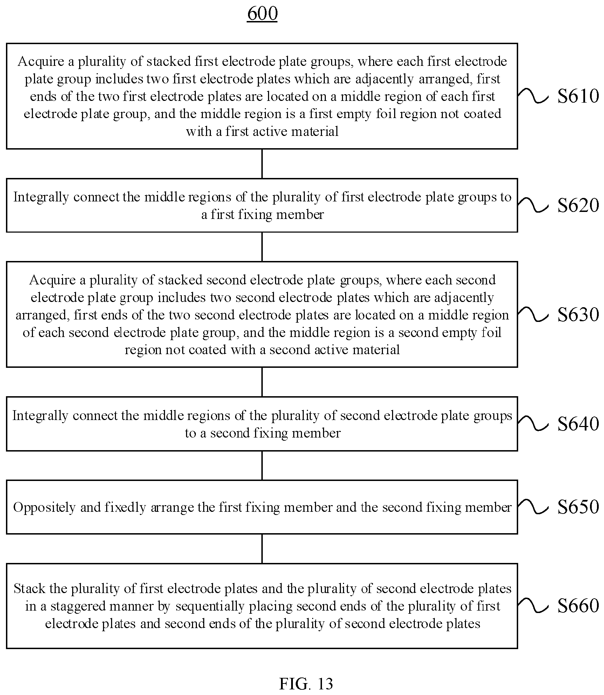

FIG. 13 is a schematic flowchart block diagram of another method 600 for stacking electrode plates according to an embodiment of the present application.

As shown in FIG. 13, the method 600 for stacking the electrode plates includes the following steps.

In S610, a plurality of stacked first electrode plate groups are acquired, where each of the plurality of first electrode plate groups includes two first electrode plates which are adjacently arranged, first ends of the two first electrode plates are located on a middle region of each first electrode plate group, and the middle region is a first empty foil region not coated with a first active material.

In S620, the middle regions of the plurality of first electrode plate groups are integrally connected to a first fixing member.

In S630, a plurality of stacked second electrode plate groups are acquired, where each second electrode plate group includes two second electrode plates which are adjacently arranged, first ends of the two second electrode plates are located on a middle region of each second electrode plate group, and the middle region is a second empty foil region not coated with a second active material.

In S640, the first ends of the plurality of second electrode plates are integrally connected to a second fixing member.

In S650, the first fixing member and the second fixing member are oppositely and fixedly arranged.

In S660, the plurality of first electrode plates and the plurality of second electrode plates are stacked in a staggered manner by sequentially placing second ends of the plurality of first electrode plates and second ends of the plurality of second electrode plates.

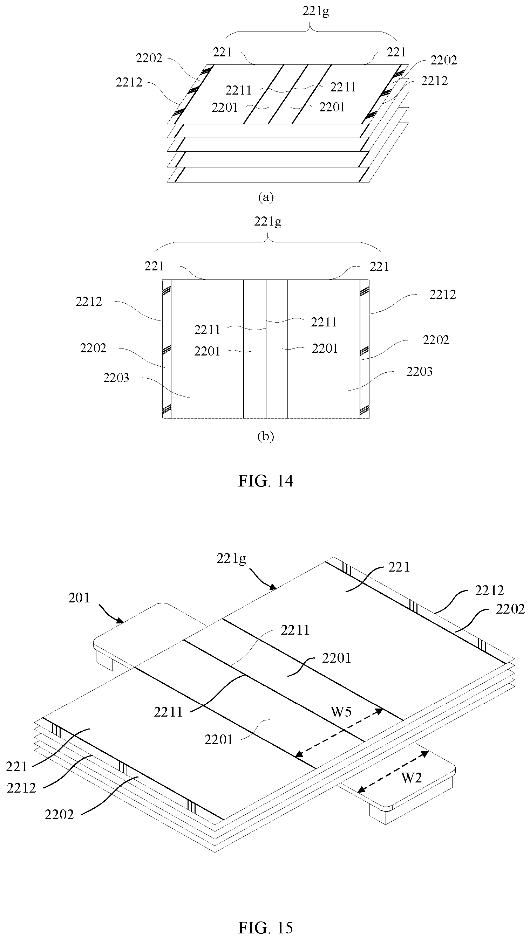

For convenience of explanation and understanding, FIG. 14 is a schematic structural diagram corresponding to step S610 shown in FIG. 13. Figure (a) of FIG. 14 shows a three-dimensional schematic diagram of a plurality of first electrode plate groups 221g, and figure (b) of FIG. 14 shows a plane schematic diagram of the first electrode plate group 221g.

As shown in (a) and (b) of FIG. 14, the plurality of first electrode plate groups 221g are stacked, each of the plurality of first electrode plate groups 221g includes two first electrode plates 221 which are adjacently and horizontally arranged, and the two first electrode plates 221 are of an integral structure. Specifically, the first ends 2211 of the two first electrode plates 221 are adjacently arranged and connected to each other. The first ends 2211 of the two first electrode plates 221 are located in the middle region of the first electrode plate group 221g, and the middle region is not coated with the first active material, and is shown in the figure as first empty foil regions 2201. The middle region of the first electrode plate group 221g may be a middle region of the first electrode plate group 221g along a length direction thereof.

FIG. 15 is a schematic structural diagram corresponding to step S620 shown in FIG. 13.

As shown in FIG. 15, in step S620, the plurality of first electrode plate groups 221g may be stacked on the first fixing member 201, and a welding device (not shown in FIG. 15) may integrally weld and fix the middle regions of the plurality of first electrode plate groups 221g to the first fixing member 201. Specifically, the welding device may weld and fix the first empty foil regions 2201 located at the middle region of the plurality of first electrode plate groups 221g to the first fixing member 201.

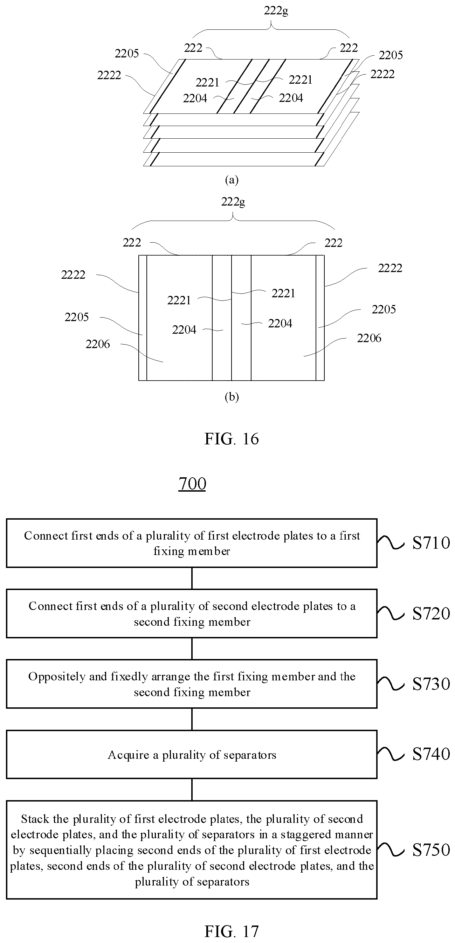

FIG. 16 is a schematic structural diagram corresponding to step S630 shown in FIG. 13. Figure (a) of FIG. 11 shows a three-dimensional schematic diagram of a plurality of second electrode plate groups 222g, and figure (b) of FIG. 11 shows a plane schematic diagram of the second electrode plate group 222g.

Similar to the plurality of first electrode plate groups 221g shown in FIG. 14 above, as shown in (a) and (b) of FIG. 16, the plurality of second electrode plate groups 222g are stacked, each of the plurality of second electrode plate groups 222g includes two second electrode plates 222 which are adjacently and horizontally arranged, and the two second electrode plates 222 are of an integral structure. Specifically, the first ends 2221 of the two second electrode plates 222 are adjacently arranged and connected to each other. The first ends 2221 of the two second electrode plates 222 are located in the middle region of the second electrode plate group 222g, and the middle region is not coated with the second active material, and is shown in the figure as second empty foil regions 2204. The middle region of the second electrode plate group 222g may be a middle region of the second electrode plate group 222g along a length direction thereof.

Optionally, the implementation mode of step S640 may be similar to the implementation mode shown in FIG. 15 above, that is, the plurality of second electrode plate groups 222g may be stacked on the second fixing member 202, and a welding device may integrally weld and fix the middle regions (the second empty foil regions 2204) of the plurality of second electrode plates 222 to the second fixing member 202.

Through the technical solution of the embodiment of the present application, the plurality of stacked electrode plate groups (i.e., the first electrode plate groups 221g and the second electrode plate groups 222g) may be acquired, each of the plurality of electrode plate groups includes the two connected electrode plates, the middle region of each electrode plate group is the empty foil region not coated with the first active material, and connection and fixation between the plurality of electrode plates and the fixing member can be rapidly achieved by integrally connecting the middle regions of the plurality of stacked electrode plate groups to the fixing member, thereby being conducive to improving the manufacturing efficiency of the electrode assembly 22 and the battery cell 20.

Optionally, as shown in FIG. 14 and FIG. 16, in the embodiments of the present application, the second ends 2212 of the two first electrode plates 221 in the first electrode plate group 221g are located in two end regions of the first electrode plate group 221g, and the two end regions are insulating regions 2202 coated with an insulating material. Similarly, the second ends 2222 of the two second electrode plates 222 in each second electrode plate group 222g are located on two end regions of the second electrode plate group 222g, and the two end regions are third empty foil regions 2205 not coated with a second active material.

After the plurality of first electrode plate groups 221g are connected to and fixed on the first fixing member 201, the plurality of second electrode plate groups 222g are connected to and fixed on the second fixing member 202, and the plurality of first electrode plates 221 in the plurality of first electrode plate groups 221g and the plurality of second electrode plates 222 in the plurality of second electrode plate groups 222g are stacked, the insulating regions 2202 of the first electrode plates 221 can be used for insulating the first electrode plates 221 from the second electrode plates 222, and mutual influence between the first electrode plates 221 and the second electrode plates 222 is reduced, which is conducive to improving the operation reliability of the electrode assembly 22 and the battery cell 20.

Optionally, in some implementations of the embodiment of the present application, referring back to FIG. 15, among the plurality of first electrode plate groups 221g connected to the first fixing member 201, a width W5 of the middle region of the first electrode plate group 221g that is most distal to the first fixing member 201 is greater than a width W2 of the first fixing member 201. The width W5 of the middle region is a sum of widths of the first empty foil regions 2201 of the two first electrode plates 221.

In some examples, the width of the middle region of each of the plurality of first electrode plate groups 221g is greater than the width of the first fixing member 201.

Alternatively, in some other examples, the widths of the middle regions of the plurality of first electrode plate groups 221g decrease sequentially along a stacking direction of the plurality of first electrode plate groups 221g from top to bottom. The widths of the middle regions of only a part of the plurality of first electrode plate groups 221g are greater than the width of the first fixing member 201.

Through the technical solution of the implementations, the widths of the middle regions of at least part of the plurality of first electrode plate groups 221g are greater than the width of the first fixing member 201, for example, in a welding process, the width of the middle region of the first electrode plate group 221g in the plurality of first electrode plate groups 221g that is most distal to the first fixing member 201 is greater than the width of the first fixing member 201, such that the welding effect between the plurality of first electrode plate groups 221g and the first fixing member 201 can be improved, and the use reliability of the electrode assembly 22 and the battery cell 20 is improved.

As an example but not limitation, a ratio of the width W5 of the middle region of the first electrode plate group 221g of the plurality of first electrode plate groups 221g that is most distal to the first fixing member 201 to the width W2 of the first fixing member 201 satisfies: $1 < W5/W2 \leq 1.4$.

By designing the ratio of the width W5 of the middle region of the first electrode plate group 221g to the width W2 of the first fixing member 201, the width W5 of the middle region of the first electrode plate group 221g can be effectively controlled on the basis of determining the width W2 of the first fixing member 201, such that the width of the middle region is within a proper range, which not only can improve the welding effect of the first electrode plate group 221g and the first fixing member 201, but also can increase the area of the first active region 2203 of the first electrode plate group 221g that is coated with the first active material, and improve the comprehensive performance of the electrode assembly 22.

Similar to the above-mentioned welding of the plurality of first electrode plate groups 221g and the first fixing member 201, in some implementations, among the plurality of second electrode plate groups 222g connected to the second fixing member 202, a width of the middle region of the second electrode plate group 222g that is most distal to the second fixing member 202 is greater than a width of the second fixing member 202.

In some examples, the width of the middle region of each of the plurality of second electrode plate groups 222g is greater than the width of the second fixing member 202.

Alternatively, in other examples, the widths of the middle regions of the plurality of second electrode plate groups 222g decrease sequentially along a stacking direction of the plurality of second electrode plate groups 222g from top to bottom. The widths of the middle regions of only a part of the plurality of second electrode plate groups 222g are greater than the width of the second fixing member 202.

As an example but not limitation, a ratio of the width W6 of the middle region of the second electrode plate group 222g of the plurality of second electrode plate groups 222g that is most distal to the second fixing member 202 to the width W4 of the second fixing member 202 satisfies: $1 < W6/W4 \leq 1.4$.

FIG. 17 is a schematic flowchart block diagram of another method 700 for stacking electrode plates according to an embodiment of the present application.

As shown in FIG. 17, the method 700 for stacking the electrode plates includes the following steps.

In S710, first ends of a plurality of first electrode plates are connected to a first fixing member.

In S720, first ends of a plurality of second electrode plates are connected to a second fixing member.

In S730, the first fixing member and the second fixing member are oppositely and fixedly arranged.

In S740, a plurality of separators are acquired.

In S750, the plurality of first electrode plates, the plurality of second electrode plates, and the plurality of separators are stacked in a staggered manner by sequentially placing second ends of the plurality of first electrode plates, second ends of the plurality of second electrode plates, and the plurality of separators.

Optionally, the related technical solutions of step S710 to step S730 may refer to the related descriptions of the embodiments shown in FIG. 4 to FIG. 6 above.

In step S740, the plurality of separators 223 may be acquired to be disposed between the first fixing member 201 and the second fixing member 202. As an example, the plurality of separators 223 may be stacked on an upper region between the first fixing member 201 and the second fixing member 202.

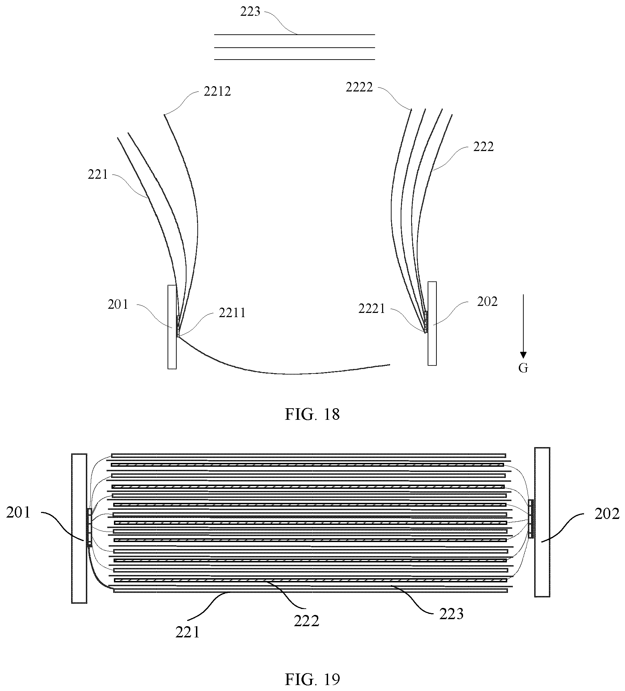

For convenience of explanation and understanding, FIG. 18 is a schematic structural diagram corresponding to step S750 shown in FIG. 17.

As shown in FIG. 18, the first ends 2211 of the plurality of first electrode plates 221 are connected to the first fixing member 201, and the second ends 2212 of the plurality of first electrode plates 221 may be clamped above the first fixing member 201 by a first clamping device (not shown in the figure). Similarly, the first ends 2221 of the plurality of second electrode plates 222 are connected to the second fixing member 202, and the second ends 2222 of the plurality of second electrode plates 222 may be clamped above the second fixing member 202 by a second clamping device (not shown in the figure). The plurality of separators 223 may be clamped and fixed on the upper region between the first fixing member 201 and the second fixing member 202 by a third clamping device.

The first clamping device may sequentially release the second ends 2212 of the plurality of first electrode plates 221, the second clamping device may sequentially release the second ends 2222 of the plurality of second electrode plates 222, and the third clamping device may sequentially release the plurality of separators 223, such that the plurality of first electrode plates 221, the plurality of second electrode plates 222, and the plurality of separators 223 are sequentially stacked.

An electrical assembly formed by sequentially stacking the plurality of first electrode plates 221, the plurality of second electrode plates 222, and the plurality of separators 223 may be, for example, as shown in FIG. 19. In the electrical assembly, the first electrode plates 221, the separators 223, and the second electrode plates 222 are sequentially arranged along a stacking direction, and one separator 223 is arranged between every two adjacent first electrode plate 221 and second electrode plate 222.

Through the technical solution of the embodiment of the present application, the plurality of separators 223 may be isolated between the first electrode plates 221 and the second electrode plates 222 to form the electrode assembly 22 with stable performance in the battery cell 20. In addition, the separators 223 also do not need to be subjected to Z-shaped folding, which can reduce the fracture risk of the separators 223, and further improve the operation performance of the electrode assembly 22 and the battery cell 20.

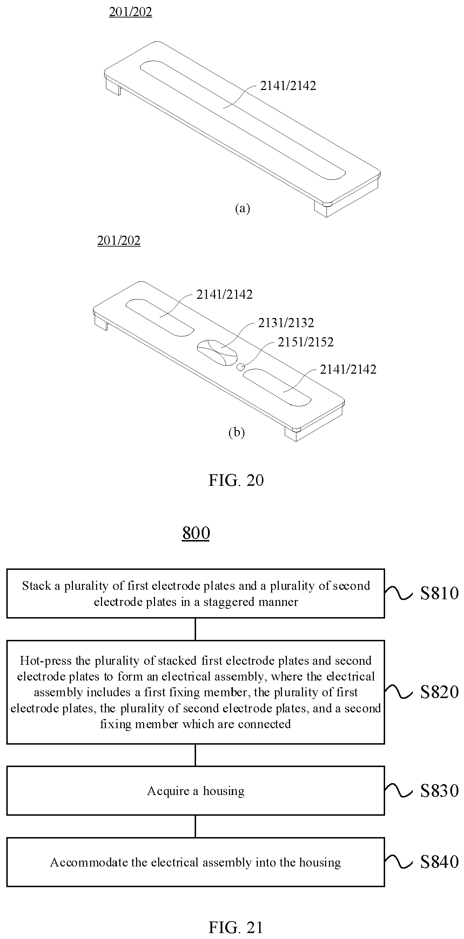

FIG. 20 is a schematic structural diagram of two types of first fixing members 201 or second fixing members 202 according to an embodiment of the present application.

As shown in (a) of FIG. 20, the first fixing member 201 includes a first cover plate applied to a battery cell 20, and the first ends 2211 of the plurality of first electrode plates 221 (not shown in FIG. 20) are connected to a first electrode terminal 2141 of the first cover plate; and/or, the second fixing member 202 includes a second cover plate applied to the battery cell 20, and the first ends 2221 of the plurality of second electrode plates 222 (not shown in FIG. 20) are connected to a second electrode terminal 2142 of the second cover plate.

Optionally, as shown in (a) of FIG. 20, the first electrode terminal 2141 on the first fixing member 201 and/or the second electrode terminal 2142 on the second fixing member 202 may take a strip shape. As an example, a length dimension of the first electrode terminal 2141 may be greater than 1/2 of a length dimension of the first fixing member 201. In some implementations, both ends of the first electrode terminal 2141 in a length direction may be proximal to the edges of the first fixing member 201. Similarly, a length dimension of the second electrode terminal 2142 may be greater than 1/2 of a length dimension of the second fixing member 202. In some implementations, both ends of the second electrode terminal 2021 in a length direction may be proximal to the edges of the second fixing member 202.

In the technical solution of the embodiment of the present application, only the first electrode terminal 2141 may be disposed on the first fixing member 201 (i.e., the first cover plate), and/or only the second electrode terminal 2142 may be disposed on the second fixing member 202 (i.e., the second cover plate), such that the first electrode terminal 2141 and/or the second electrode terminal 2142 may have a large area, and thus have a large current passage capacity. A thickness and a size of the electrode plates connected to the first cover plate and the second cover plate may be designed to be relatively large. The first cover plate and the second cover plate may be applied to the battery cell 20 with a high energy density.

As shown in (b) of FIG. 20, the first fixing member 201 includes a first cover plate, the first cover plate is further provided with a first pressure relief mechanism 2131, and a plurality of first electrode terminals 2141 on the first cover plate are respectively disposed on two sides of the first pressure relief mechanism 2131; and/or the second fixing member 202 includes a second cover plate, the second cover plate is further provided with a second pressure relief mechanism 2132, and the second electrode terminals 2142 on the second cover plate are respectively disposed on two sides of the second pressure relief mechanism 2132.

Specifically, in the embodiment of the present application, in addition to the first electrode terminals 2141 and/or the second electrode terminals 2142, the first fixing member 201 and/or the second fixing member 202 may further be provided with a first pressure relief mechanism 2131 and/or a second pressure relief mechanism 2132, and specific solutions of the first pressure relief mechanism 2131 and the second pressure relief mechanism 2132 may refer to the related description of the pressure relief mechanism 213 in the embodiment shown in FIG. 2 above.

As an example, as shown in (b) of FIG. 20, in the first fixing member 201, the first pressure relief mechanism 2131 may be disposed in a middle region of the first fixing member 201, two first electrode terminals 2141 are respectively disposed on two sides of the first pressure relief mechanism 2131, and the two first electrode terminals 2141 may be both positive electrode terminals or negative electrode terminals. Each first electrode terminal 2141 may be connected to the plurality of first electrode plates 221, and the connection mode between each first electrode terminal 2141 and the plurality of first electrode plates 221 may refer to the related description of the method embodiments above.

Similarly, in the second fixing member 202, the second pressure relief mechanism 2132 may be disposed in a middle region of the second fixing member 202, the two second electrode terminals 2142 are respectively disposed on two sides of the second pressure relief mechanism 2132, and polarities of the two second electrode terminals 2142 are the same and opposite to polarities of the first electrode terminals 2141. Each second electrode terminal 2142 may be connected to the plurality of second electrode plates 222, and the connection mode between each second electrode terminal 2142 and the plurality of second electrode plates 222 may also refer to the related description of the method embodiments above.

Through the technical solution of the implementations, the first fixing member 201 and/or the second fixing member 202 are/is provided with the plurality of electrode terminals and the pressure relief mechanism/the pressure relief mechanisms, and while high-temperature and high-pressure emissions inside the battery cell 20 are discharged through the pressure relief mechanisms, and the possibility of blasting of the battery cell 20 is reduced, each electrode terminal of the plurality of electrode terminals may be connected to the plurality of electrode plates separately, which is conducive to forming a plurality of separable electrode assemblies 22 in the battery cell 20, achieves flexible connection of the battery cell 20, and is conducive to improving the comprehensive performance of the battery cell 20.

Optionally, as further shown in (b) of FIG. 20, in addition to the first pressure relief mechanism 2131 and the plurality of first electrode terminals 2141, the first fixing member 201 is further provided with a first liquid injection hole 2151, and/or in addition to the second pressure relief mechanism 2132 and the plurality of second electrode terminals 2142, the second fixing member 202 is further provided with a second liquid injection hole 2152.

The first liquid injection hole 2151 and/or the second liquid injection hole 2152 may be configured to inject an electrolytic solution into the battery cell 20. Optionally, the first liquid injection hole 2151 and/or the second liquid injection hole 2152 may be disposed in the middle region of the first fixing member 201 and/or the second fixing member 202, or may also be disposed in other regions of the first fixing member 201 and/or the second fixing member 202, which is not specifically limited in the embodiment of the present application.

Optionally, in addition to that the first fixing member 201 and/or the second fixing member 202 may include the first cover plate and/or the second cover plate applied to the battery cell 20 as shown in FIG. 20, the first fixing member 201 may further include a first current collecting member applied to the battery cell 20, and the first ends 2211 of the plurality of first electrode plates 221 are connected to the first current collecting member; and/or, the second fixing member 202 includes a second current collecting member applied to the battery cell 20, and the first ends 2221 of the plurality of second electrode plates 222 are connected to the second current collecting member.

Specifically, the first current collecting member is configured to connect the first ends 2211 of the plurality of first electrode plates 221 and the first electrode terminals 2141 on the first cover plate. Optionally, first tabs are formed on the first ends 2211 of the first electrode plates 221, and the first current collecting member is configured to connect the first tabs of the plurality of first electrode plates 221 and the first electrode terminals 2141 on the first cover plate. Similarly, the second current collecting member is configured to connect the first ends 2221 of the plurality of second electrode plates 222 and the second electrode terminals 2142 on the second cover plate. Optionally, second tabs are formed on the first ends 2221 of the second electrode plates 222, and the second current collecting member is configured to connect the second tabs of the plurality of second electrode plates 222 and the second electrode terminals 2142 on the second cover plate.

Through the technical solution of the embodiment of the present application, the end covers of the battery cell 20 and the plurality of electrode plates are connected through the current collecting members, which is conducive to the flexible application of the electrode assembly 22 in different battery cells 20, and enlarging application scenarios of the electrode assembly 22.

In some implementations of the embodiment of the present application, a difference between a length of each first electrode plate 221 and a length of each second electrode plate 222 is greater than or equal to 0.1 mm; and/or, a difference between a width of each first electrode plate 221 and a width of each second electrode plate 222 is greater than or equal to 0.1 mm.

Optionally, the first electrode plates 221 may be negative electrode plates, and the second electrode plates 222 may be positive electrode plates. In the implementations, the first electrode plates 221 and the second electrode plates 222 are stacked mutually, such that the first electrode plates 221 may wrap the second electrode plates 222 in a stacking direction, and thus a large corresponding area is formed between the first electrode plates 221 and the second electrode plates 222, which is conducive to improving the electrical performance of the battery cell 20.

As an example but not limitation, the difference between the length of each first electrode plate 221 and the length of each second electrode plate 222 is greater than or equal to 0.5 mm and less than or equal to 1 mm; and/or, the difference between the width of each first electrode plate 221 and the width of each second electrode plate 222 is greater than or equal to 0.5 mm and less than or equal to 1 mm.

In the implementations, the first electrode plates 221 may wrap the second electrode plates 222 in the stacking direction, thereby improving the electrical performance of the battery cell 20. At the same time, the size of the first electrode plates 221 is not too large, thereby reducing unnecessary space waste of the first electrode plates 221 in the battery cell 20 and improving the energy density of the battery cell 20.

In some implementations of the embodiment of the present application, a quantity of the first electrode plates 221 is greater than or equal to 10; and/or, a quantity of the second electrode plates 222 is greater than or equal to 10.

Through the technical solution of the implementations, the battery cell 20 may have sufficient first electrode plates 221 and second electrode plates 222 to generate large energy, such that the energy density and the use performance of the battery cell 20 are improved.

As an example but not limitation, the quantity of the first electrode plates 221 is between 30 and 80; and/or the quantity of the second electrode plates 222 is between 30 and 80.

Through the technical solution of the implementations, the quantity of the first electrode plates 221 and the quantity of the second electrode plates 222 are controlled within a certain range, and the volume and the energy density of the battery 20 can be considered, such that the battery cell 20 can be preferably applied to various application scenarios.

In some implementations of the embodiment of the present application, the length and width of each first electrode plate 221 and/or each second electrode plate 222 may be greater than 10 cm. As an example but not limitation, the length and width of each first electrode plate 221 may be between 20 cm and 100 cm, and/or the length and width of each second electrode plate 222 may be between 20 cm and 100 cm.

Relevant embodiments of the method for stacking the electrode plates according to the embodiments of the present application are described with reference to FIG. 4 to FIG. 20 above, and a method for manufacturing a battery cell according to an embodiment of the present application is described with reference to FIG. 21 to FIG. 23.

FIG. 21 is a schematic flowchart block diagram of a method 800 for manufacturing a battery cell according to an embodiment of the present application.

As shown in FIG. 21, the method 800 for manufacturing the battery cell includes the following steps.

In S810, a plurality of first electrode plates and a plurality of second electrode plates are stacked in a staggered manner.

In S820, the plurality of stacked first electrode plates and second electrode plates are subjected to hotpressing to form an electrical assembly, where the electrical assembly includes a first fixing member, the plurality of first electrode plates, the plurality of second electrode plates, and a second fixing member which are connected.

In S830, a housing is acquired.

In S840, the electrical assembly is accommodated into the housing.

Specifically, in the embodiment of the present application, in step S810, the plurality of first electrode plates 221 and the plurality of second electrode plates 222 may be stacked by using the method for stacking the electrode plates according to any one of the above embodiments.

In step S820, the plurality of stacked first electrode plates 221 and second electrode plates 222 are subjected to hot-pressing, so as to compress the thickness of the plurality of first electrode plates 221 and second electrode plates 222 in a stacking direction, and to make each of the first electrode plates 221 and the second electrode plates 222 be closely attached to an adjacent electrode plate, thereby forming an electrical assembly with a tight structure. It can be understood that, in the case that the separators 223 are disposed between the first electrode plates 221 and the second electrode plates 222, in step S820, the plurality of stacked first electrode plates 221, second electrode plates 222, and separators 223 may be subjected to hot-pressing to form the electrical assembly. The structural configuration of the electrical assembly may refer to the embodiment shown in FIG. 19 above.

In step S830 and step S840, the electrical assembly formed by stacking and hot-pressing the plurality of first electrode plates 221 and the plurality of second electrode plates 222 may be accommodated into the housing, thereby forming a battery cell 20.

Since the stacking of the plurality of first electrode plates 221 and the plurality of second electrode plates 222 in the battery cell 20 has high precision, high manufacturing efficiency, and high quality and performance, the battery cell 20 manufactured by the embodiment of the present application also has high manufacturing efficiency and high quality and performance.

In some implementations, the housing of the battery cell 20 may include a foldable housing, and in this case, step S840 above may include: the foldable housing is folded according to the shape of the electrical assembly, such that a three-dimensional hollow housing is formed on the foldable housing and wraps at least part of a surface of the electrical assembly.

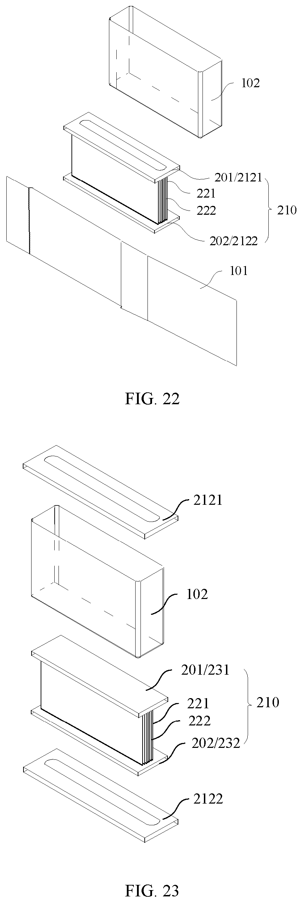

For convenience of understanding, FIG. 22 is a schematic structural diagram corresponding to step S840 shown in FIG. 21.

As shown in FIG. 22, the foldable housing 101 may be in an unfolded state of the three-dimensional hollow housing 102. As an example, the three-dimensional hollow housing 102 is a square three-dimensional housing with both ends open, and the foldable housing 101 may be a rectangular plate-like housing.

The foldable housing 101 may be folded along the shape of the electrical assembly 210, so as to wrap at least part of the surface of the electrical assembly 210. Specifically, after the foldable housing 101 is folded to form the three-dimensional hollow housing 102, the plurality of first electrode plates 221 and the plurality of second electrode plates 222 in the electrical assembly 210 may be accommodated into a hollow cavity of the three-dimensional hollow housing 102, that is, the foldable housing 101 may wrap the plurality of first electrode plates 221 and the plurality of second electrode plates 222.

Through the technical solution of the implementations, after the plurality of first electrode plates 221 and the plurality of second electrode plates 222 are stacked, the electrical assembly 210 formed by the plurality of first electrode plates 221 and the plurality of second electrode plates 222 can be kept in place, and the foldable housing 101 wraps and is folded around the electrical assembly 210, such that the three-dimensional hollow housing 102 accommodating the electrical assembly 210 is formed. In the implementations, a one-stop manufacturing of the battery cell 20 can be achieved, thereby reducing the problems possibly generated in a moving process of the electrical assembly 210, and being conducive to further improving the manufacturing efficiency and the use performance of the battery cell 20.

In some implementations, in the case that the first fixing member 201 and the second fixing member 202 in the electrical assembly 210 include a first cover plate 2121 and a second cover plate 2122, the method 800 for manufacturing the battery cell above may further include: connecting the first cover plate to one opening of the three-dimensional hollow housing; and connecting the second cover plate to the other opening of the three-dimensional hollow housing.

Specifically, as shown in FIG. 22, after the three-dimensional hollow housing 102 wraps and accommodates the electrical assembly 210, the first fixing member 201 (i.e., the first cover plate 2121) and the second fixing member 202 (i.e., the second cover plate 2122) may be correspondingly disposed at the two openings of the three-dimensional hollow housing 102, and the sizes of the first cover plate 2121 and the second cover plate 2122 are matched with the two openings, such that the two openings can be lidded with the first cover plate 2121 and the second cover plate 2122, and the first cover plate 2121 and the second cover plate 2122 are fitted to the three-dimensional hollow housing 102 to form a closed hollow housing of the battery cell 20.

Through the technical solution of the implementations, in the case that the first fixing member 201 and the second fixing member 202 in the electrical assembly 210 include the first cover plate 2121 and the second cover plate 2122, the two end openings of the three-dimensional hollow housing 102 are directly lidded with the first fixing member 201 and the second fixing member 202 to form the closed housing of the battery cell 20. The technical solution is easy to achieve and low in manufacturing cost, which is conducive to further improving the machining efficiency of the battery cell 20 and reducing the manufacturing cost.

In addition to that the three-dimensional hollow housing 102 is formed by folding the foldable housing 101, in other implementations, the housing may be directly the three-dimensional hollow housing 102, the three-dimensional hollow housing 102 includes two openings disposed opposite to each other, and in this case, step S840 above may include: the electrical assembly is accommodated into the three-dimensional hollow housing through any one of the two openings.

For convenience of understanding, FIG. 23 is another schematic structural diagram corresponding to step S840 shown in FIG. 21.

As shown in FIG. 23, the electrical assembly 210 may enter the cavity of the three-dimensional hollow housing 102 through any one of the openings of the three-dimensional hollow housing 102, such that the three-dimensional hollow housing 102 can wrap the plurality of first electrode plates 221 and the plurality of second electrode plates 222 in the electrical assembly 210.

It can be understood that, in the implementation, the size of the first fixing member 201 and/or the second fixing member 202 in the electrical assembly 210 needs to be less than the size of the opening of the three-dimensional hollow housing 102, such that the electrical assembly 210 can enter the cavity of the three-dimensional hollow housing 102 through the opening.

Through the technical solution of the implementations, the electrical assembly 210 formed by the plurality of first electrode plates 221, the plurality of second electrode plates 222, the first fixing member 201, and the second fixing member 202 can be conveniently accommodated and mounted into the three-dimensional hollow housing 102, thereby being conducive to improving the production and manufacturing efficiency of the battery cell 20.

Optionally, as shown in FIG. 23, in the implementation, the first fixing member 201 in the electrical assembly 210 includes a first current collecting member 231 of the battery cell 20, and the second fixing member 202 in the electrical assembly 210 includes a second current collecting member 232 of the battery cell 20. In this case, the method 800 for manufacturing the battery cell above may further include: the first current collecting member 231 is connected to the first cover plate 2121 of the battery cell 20, and one opening of the two openings of the three-dimensional hollow housing 102 is lidded with the first cover plate 2121; and the second current collecting member 232 is connected to the second cover plate 2122 of the battery cell 20, and the other opening of the two openings of the three-dimensional hollow housing 102 is lidded with the second cover plate 2122.

Specifically, the battery cell 20 manufactured by the implementation may simultaneously include the first current collecting member 231, the second current collecting member 232, the first cover plate 2121, and the second cover plate 2122, where the first current collecting member 231 and the second current collecting member 232 may be used as the first fixing member 201 and the second fixing member 202 to stack the plurality of first electrode plates 221 and the plurality of second electrode plates 222, the first cover plate 2121 and the second cover plate 2122 are respectively connected to the first current collecting member 231 and the second current collecting member 232, and the two openings of the three-dimensional hollow housing 102 are lidded with the first cover plate and the second cover plate, such that a battery cell 20 with stable and reliable performance is formed.

Optionally, in any one of the above embodiments, the battery cell 20 may further include a plurality of separators 223, and a sum of thicknesses of the plurality of hot-pressed first electrode plates 221, second electrode plates 222, and separators 223 is less than or equal to a width of the first fixing member 201 and/or the second fixing member 202.

Specifically, a thickness direction of the plurality of hot-pressed first electrode plates 221 and second electrode plates 222 is an arrangement direction of the plurality of first electrode plates 221 and the plurality of second electrode plates 222. The plurality of first electrode plates 221, the plurality of second electrode plates 222, and the plurality of separators 223 may be arranged along a width direction of the first fixing member 201 and the second fixing member 202. In the arrangement direction of the plurality of first electrode plates 221, the plurality of second electrode plates 222, and the plurality of separators 223, a sum of thickness dimensions of the plurality of first electrode plates 221, the plurality of second electrode plates 222, and the plurality of separators 223 is less than or equal to a width dimension of the first fixing member 201 and/or the second fixing member 202.

Optionally, length dimensions of the plurality of first electrode plates 221, the plurality of second electrode plates 222, and the plurality of separators 223 may be comparable to length dimensions of the first fixing member 201 and the second fixing member 202, that is, the length dimensions of the plurality of first electrode plates 221, the plurality of second electrode plates 222, and the plurality of separators 223 may be slightly less than the length dimensions of the first fixing member 201 and the second fixing member 202.

Through the technical solution of the embodiment, the electrical assembly 210 formed by the plurality of first electrode plates 221, the plurality of second electrode plates 222, the plurality of separators 223, the first fixing member 201, and the second fixing member 202 can be easily mounted and accommodated into the housing of the battery cell 20, thereby being conducive to further improving the manufacturing efficiency and the product performance of the battery cell 20.

As an example but not limitation, a ratio of the sum D of the thicknesses of the plurality of hot-pressed first electrode plates 221, second electrode plates 222, and separators 223 to the width W of the first fixing member 201 and/or the second fixing member 202 satisfies: $0.9 \leq D/W \leq 1$.

Through the technical solution of the implementations, the sum of the thicknesses of the plurality of first electrode plates 221 and the plurality of second electrode plates 222 and the width of the first fixing member 201 and/or the second fixing member 202 can be controlled within a suitable proportion range, which is conducive to mounting the electrical assembly 210 in the battery cell 20, also does not cause the waste of space in the housing, and can comprehensively improve the manufacturing efficiency and energy density of the battery cell 20.

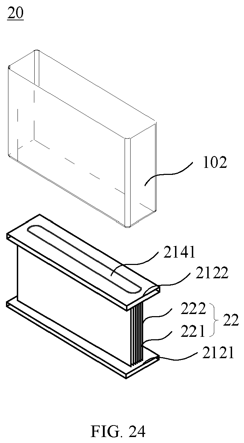

The present application further provides a battery cell 20. FIG. 24 is a schematic structural diagram of a battery cell 20 according to an embodiment of the present application.

As shown in FIG. 24, the battery cell 20 includes: a housing 102, provided with a first opening and a second opening which are opposite to each other; an electrode assembly 22, accommodated in the housing 102, the electrode assembly 22 including a plurality of first electrode plates 221 and a plurality of second electrode plates 222 which are stacked and separated; a first cover plate 2121, lidding the first opening, the first cover plate 2121 being provided with a first electrode terminal 2141, and the first electrode terminal 2141 being connected to the plurality of first electrode plates 221; and a second cover plate 2122, lidding the second opening, the second cover plate 2122 being provided with a second electrode terminal 2142 (not shown in FIG. 24), and the second electrode terminal 2142 being connected to the plurality of second electrode plates 222.

Optionally, the battery cell 20 in the embodiment of the present application may be obtained by any one of the manufacturing methods provided in the above embodiments. The related structural solution of the battery cell 20 in the embodiment of the present application may correspond to the related description in the above method embodiments.

Through the technical solution of the embodiment of the present application, the electrode assembly 22 of the battery cell 20 includes the plurality of first electrode plates 221 and the plurality of second electrode plates 222 which are stacked and separated, and corner cracking and damage due to folding do not occur in the first electrode plates 221 and the second electrode plates 222, thereby improving the use performance of the electrode assembly 22 and the battery cell 20 in which the electrode assembly is located. Because the risk of corner cracking of the electrode plates does not need to be worried, thinner base materials can be used for the electrode plates, the energy density of the battery in which the electrode plates are located can be improved, and the cost of the base materials of the electrode plates is reduced.

Optionally, in some implementations, the plurality of first electrode plates 221 and the plurality of second electrode plates 222 may be directly connected to the cover plates of the battery cell 20, the first electrode plates 221 and the second electrode plates 222 do not need to be subjected to tab cutting, and are connected to the cover plates not through the current collecting members. Therefore, the problem of dislocation of the tabs of the plurality of electrode plates generated in a production process of a traditional battery cell can be eliminated, thereby eliminating the problems of large area of welding regions, redundant weight of the tabs, redundant size of the current collecting members, or the like caused by dislocation of the tabs, being conducive to reducing the area of the welding regions of the first electrode plates 221 and the second electrode plates 222 that are welded on the cover plates, and accordingly further reducing the area of the first electrode plates 221 and the area of the second electrode plates 222, and improving the energy density and the overall performance of the battery cell 20 in which the electrode assembly 22 is located.

Optionally, in some implementations, at least one of the plurality of first electrode plates 221 includes a first empty foil region 2201, the first empty foil region 2201 is connected to the first electrode terminal 2141 on the first cover plate 2121, and a width of the first empty foil region 2201 is greater than or equal to a width of the first cover plate 2121; and/or, at least one of the plurality of second electrode plates 222 includes a second empty foil region 2204, the second empty foil region 2204 is connected to the second electrode terminal 2142 on the second cover plate 2122, and a width of the second empty foil region 2204 is greater than or equal to a width of the second cover plate 2122.

Specifically, the related technical solutions of the first empty foil region 2201 in the at least one first electrode plate 221 and the second empty foil region 2204 in the at least one second electrode plate 222 may refer to the related solutions shown in FIG. 9 to FIG. 11 in the above method embodiments.

By designing the widths of the first empty foil region 2201 in the first electrode plate 221 and the second empty foil region 2204 in the second electrode plate 222, the welding effect between the first electrode plate 221 and the first cover plate 2121 and the welding effect between the second electrode plate 222 and the second cover plate 2122 are improved, and the use reliability of the electrode assembly 22 and the battery cell 20 is improved.

Optionally, in some implementations, a ratio of the width W1 of the first empty foil region 2201 of the at least one first electrode plate 221 to the width W2 of the first cover plate 2121 satisfies: $1 < W1/W2 \leq 1.4$; and/or, a ratio of the width W3 of the second empty foil region 2204 of the at least one second electrode plate 222 to the width W4 of the second cover plate 2122 satisfies: $1 < W3/W4 \leq 1.4$.

Optionally, in some implementations, the plurality of first electrode plates 221 and the plurality of second electrode plates 222 are stacked along a width direction of the first cover plate 2121 and/or the second cover plate 2122.

Optionally, in some implementations, the electrode assembly 22 further includes a plurality of separators 223, disposed between the first electrode plates 221 and the second electrode plates 222 adjacent to each other, and a ratio of a sum D of thicknesses of the plurality of stacked first electrode plates 221, second electrode plates 222, and separators 223 to the width W of the first cover plate 2121 and/or the second cover plate 2122 satisfies: $0.9 \leq D/W \leq 1$.

Optionally, in some implementations, a difference between a length of each first electrode plate 221 and a length of each second electrode plate 222 is greater than or equal to 0.1 mm; and/or, a difference between a width of each first electrode plate 221 and a width of each second electrode plate 222 is greater than or equal to 0.1 mm.

Optionally, in some implementations, the difference between the length of each first electrode plate 221 and the length of each second electrode plate 222 is greater than or equal to 0.5 mm and less than or equal to 1 mm; and/or, the difference between the width of each first electrode plate 221 and the width of each second electrode plate 222 is greater than or equal to 0.5 mm and less than or equal to 1 mm.

Optionally, in some implementations, a quantity of the plurality of first electrode plates 221 is greater than or equal to 10; and/or, a quantity of the plurality of second electrode plates 222 is greater than or equal to 10.

Optionally, in some implementations, the quantity of the plurality of first electrode plates 221 is between 30 and 80; and/or the quantity of the plurality of second electrode plates 222 is between 30 and 80.

The present application further provides a battery 10, the battery 10 may include a case 110 and the battery cell 20 of any one of the above embodiments, and the one or more battery cells 20 are accommodated in the case 110.

The present application further provides an electric device. The electric device may include the battery 10 in the foregoing embodiments, and the battery 10 is configured to supply electric energy to the electric device. Optionally, the electric device may be a vehicle, a ship, or a spacecraft.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

**Claims**

1. A method for stacking electrode plates, comprising:

   connecting first ends of a plurality of first electrode plates to a first fixing member;
   connecting first ends of a plurality of second electrode plates to a second fixing member;
   oppositely and fixedly arranging the first fixing member and the second fixing member; and
   stacking the plurality of first electrode plates and the plurality of second electrode plates in a staggered manner by sequentially placing second ends of the plurality of first electrode plates and second ends of the plurality of second electrode plates.

2. The method for stacking the electrode plates according to claim 1, wherein stacking the plurality of first electrode plates and the plurality of second electrode plates in the staggered manner by sequentially placing the second ends of the plurality of first electrode plates and the second ends of the plurality of second electrode plates comprises:

   clamping the second ends of the plurality of first electrode plates and the second ends of the plurality of second electrode plates; and
   sequentially releasing the second ends of the plurality of first electrode plates and the second ends of the plurality of second electrode plates so as to stack the plurality of first electrode plates and the plurality of second electrode plates in the staggered manner.

3. The method for stacking the electrode plates according to claim 1 or 2, wherein the method for stacking the electrode plates further comprises:

   acquiring the plurality of stacked first electrode plates, wherein the first ends of the plurality of first electrode plates are flush, and a surface on which the first end of each of the plurality of first electrode plates is located is a first empty foil region not coated with a first active material; and
   connecting the first ends of the plurality of first electrode plates to the first fixing member comprises:
   integrally connecting the first ends of the plurality of first electrode plates to the first fixing member.

4. The method for stacking the electrode plates according to claim 3, wherein the method for stacking the electrode plates further comprises:

   cutting the first empty foil regions of the plurality of first electrode plates to form tabs of the plurality of first electrode plates; and
   integrally connecting the first ends of the plurality of first electrode plates to the first fixing member comprises:
   integrally connecting the tabs of the plurality of first electrode plates to the first fixing member.

5. The method for stacking the electrode plates according to claim 3 or 4, wherein a surface on which the second end of each of the plurality of first electrode plates is located is an insulating region coated with an insulating material.

6. The method for stacking the electrode plates according to claim 1 or 2, wherein the method for stacking the electrode plates further comprises:

   acquiring a plurality of stacked first electrode plate groups, wherein each of the plurality of first electrode plate groups comprises two first electrode plates which are adjacently arranged, first ends of the two first electrode plates are located on a middle region of each first electrode plate group, and the middle region is a first empty foil region not coated with a first active material; and

connecting the first ends of the plurality of first electrode plates to the first fixing member comprises:

integrally connecting the middle regions of the plurality of first electrode plate groups to the first fixing member.

7. The method for stacking the electrode plates according to claim 6, wherein second ends of the two first electrode plates in each first electrode plate group are located on two end regions of the first electrode plate group, and the two end regions are insulating regions coated with an insulating material.

8. The method for stacking the electrode plates according to claim 6 or 7, wherein a width of the middle region of at least one of the plurality of first electrode plate groups is greater than a width of the first fixing member.

9. The method for stacking the electrode plates according to any one of claims 1 to 8, wherein the method for stacking the electrode plates further comprises:

acquiring the plurality of stacked second electrode plates, wherein the first ends of the plurality of second electrode plates are flush, and a surface on which the first end of each of the plurality of second electrode plates is located is a second empty foil region not coated with a second active material; and
connecting the first ends of the plurality of second electrode plates to the second fixing member comprises:
integrally connecting the first ends of the plurality of second electrode plates to the second fixing member.

10. The method for stacking the electrode plates according to claim 9, wherein the method for stacking the electrode plates further comprises:

cutting the second empty foil regions of the plurality of second electrode plates to form tabs of the plurality of second electrode plates; and
integrally connecting the first ends of the plurality of second electrode plates to the second fixing member comprises:
integrally connecting the tabs of the plurality of second electrode plates to the second fixing member.

11. The method for stacking the electrode plates according to any one of claims 1 to 8, wherein the method for stacking the electrode plates further comprises:

acquiring a plurality of stacked second electrode plate groups, wherein each of the plurality of second electrode plate groups comprises two second electrode plates which are adjacently arranged, first ends of the two second electrode plates are located on a middle region of each second electrode plate group, and the middle region is a second empty foil region not coated with a second active material; and
connecting the first ends of the plurality of second electrode plates to the second fixing member comprises:
integrally connecting the middle regions of the plurality of second electrode plate groups to the second fixing member.

12. The method for stacking the electrode plates according to claim 11, wherein second ends of the two second electrode plates in each second electrode plate group are located on two end regions of the second electrode plate group, and the two end regions are third empty foil regions not coated with a second active material.

13. The method for stacking the electrode plates according to claim 11 or 12, wherein a width of the middle region of at least one of the plurality of second electrode plate groups is greater than a width of the second fixing member.

14. The method for stacking the electrode plates according to any one of claims 1 to 13, wherein the method for stacking the electrode plates further comprises:

acquiring a plurality of separators; and
stacking the plurality of first electrode plates and the plurality of second electrode plates in the staggered manner by sequentially placing the second ends of the plurality of first electrode plates and the second ends of the plurality of second electrode plates comprises: stacking the plurality of first electrode plates, the plurality of second electrode plates, and the plurality of separators in a staggered manner by sequentially placing the second ends of the plurality of first electrode plates, the second ends of the plurality of second electrode plates, and the plurality of separators.

15. The method for stacking the electrode plates according to any one of claims 1 to 14, wherein the first fixing member comprises a first cover plate applied to a battery cell, and the first ends of the plurality of first electrode plates are connected to a first electrode terminal of the first cover plate; and/or,
the second fixing member comprises a second cover plate applied to the battery cell, and the first ends of the plurality of second electrode plates are connected to a second electrode terminal of the second cover plate.

16. The method for stacking the electrode plates according to claim 15, wherein the first cover plate is further provided with a first pressure relief mechanism, and a plurality of first electrode terminals on the first cover plate are respectively disposed on both sides of the first pressure relief mechanism; and/or, the second cover plate is further provided with a second pressure relief mechanism, and a plurality of second electrode terminals on the second cover plate are respectively disposed on both sides of the second pressure relief mechanism.

17. The method for stacking the electrode plates according to any one of claims 1 to 16, wherein the first fixing member comprises a first current collecting member applied to the battery cell, and the first ends of the plurality of first electrode plates are connected to the first current collecting member; and/or, the second fixing member comprises a second current collecting member applied to the battery cell, and the first ends of the plurality of second electrode plates are connected to the second current collecting member.

18. The method for stacking the electrode plates according to any one of claims 1 to 17, wherein a difference between a length of each first electrode plate and a length of each second electrode plate is greater than or equal to 0.1 mm; and/or, a difference between a width of each first electrode plate and a width of each second electrode plate is greater than or equal to 0.1 mm.

19. The method for stacking the electrode plates according to any one of claims 1 to 18, wherein the difference between the length of each first electrode plate and the length of each second electrode plate is greater than or equal to 0.5 mm and less than or equal to 1 mm; and/or, the difference between the width of each first electrode plate and the width of each second electrode plate is greater than or equal to 0.5 mm and less than or equal to 1 mm.

20. The method for stacking the electrode plates according to any one of claims 1 to 19, wherein a quantity of the first electrode plates is greater than or equal to 10; and/or, a quantity of the second electrode plates is greater than or equal to 10.

21. A method for manufacturing a battery cell, comprising:

the method for stacking the electrode plates according to any one of claims 1 to 20; hot-pressing a plurality of stacked first electrode plates and second electrode plates to form an electrical assembly, wherein the electrical assembly comprises a first fixing member, the plurality of first electrode plates, the plurality of second electrode plates, and a second fixing member which are connected; acquiring a housing; and accommodating the electrical assembly into the housing.

22. The method for manufacturing the battery cell according to claim 21, wherein the housing comprises a foldable housing; and accommodating the electrical assembly into the housing comprises: folding the foldable housing according to a shape of the electrical assembly, such that a three-dimensional hollow housing is formed on the foldable housing and wraps at least part of a surface of the electrical assembly.

23. The method for manufacturing the battery cell according to claim 22, wherein the three-dimensional hollow housing comprises two openings disposed opposite to each other, the first fixing member in the electrical assembly comprises a first cover plate of the battery cell, and the second fixing member in the electrical assembly comprises a second cover plate of the battery cell; and the method for manufacturing the battery cell further comprises:

connecting the first cover plate to one opening of the three-dimensional hollow housing; and connecting the second cover plate to the other opening of the three-dimensional hollow housing.

24. The method for manufacturing the battery cell according to claim 22, wherein the housing comprises the three-dimensional hollow housing, and the three-dimensional hollow housing comprises two openings disposed opposite to each other; and accommodating the electrical assembly into the housing comprises: accommodating the electrical assembly into the three-dimensional hollow housing through any one of the two openings.

25. The method for manufacturing the battery cell according to claim 24, wherein the first fixing member in the electrical assembly comprises a first current collecting member of the battery cell, and the second fixing member in the electrical assembly comprises a second current collecting member of the battery cell;

and

the method for manufacturing the battery cell further comprises:

> connecting the first current collecting member to a first cover plate of the battery cell, and lidding one opening of the two openings with the first cover plate; and
> connecting the second current collecting member to a second cover plate of the battery cell, and lidding the other opening of the two openings with the second cover plate.

26. The method for manufacturing the battery cell according to any one of claims 21 to 25, wherein hot-pressing the plurality of stacked first electrode plates and second electrode plates to form the electrical assembly comprises:
hot-pressing the plurality of stacked first electrode plates, second electrode plates, and separators to form the electrical assembly, wherein a sum of thicknesses of the plurality of hot-pressed first electrode plates, second electrode plates, and separators is less than or equal to a width of the first fixing member and/or the second fixing member.

27. The method for manufacturing the battery cell according to any one of claims 21 to 26, wherein a ratio of the sum D of the thicknesses of the plurality of hot-pressed first electrode plates, second electrode plates, and separators to the width W of the first fixing member and/or the second fixing member satisfies: $0.9 \leq D/W \leq 1$.

28. A battery cell, comprising:

> a housing, provided with a first opening and a second opening which are opposite to each other;
> an electrode assembly, accommodated in the housing, the electrode assembly comprising a plurality of first electrode plates and a plurality of second electrode plates which are stacked and separated;
> a first cover plate, lidding the first opening, the first cover plate being provided with a first electrode terminal, and the first electrode terminal being connected to the plurality of first electrode plates; and
> a second cover plate, lidding the second opening, the second cover plate being provided with a second electrode terminal, and the second electrode terminal being connected to the plurality of second electrode plates.

29. The battery cell according to claim 28, wherein at least one of the plurality of first electrode plates comprises a first empty foil region, the first empty foil region is connected to **the first** electrode terminal, and a width of the first empty foil region is greater than or equal to a width of the first cover plate; and/or, at least one of the plurality of second electrode plates comprises a second empty foil region, the second empty foil region is connected to the second electrode terminal, and a width of the second empty foil region is greater than or equal to a width of the second cover plate.

30. The battery cell according to claim 29, wherein a ratio of the width W1 of the first empty foil region of the at least one first electrode plate to the width W2 of the first cover plate satisfies: $1 < W1/W2 \leq 1.4$; and/or, a ratio of the width W3 of the second empty foil region of the at least one second electrode plate to the width W4 of the second cover plate satisfies: $1 < W3/W4 \leq 1.4$.

31. The battery cell according to any one of claims 28 to 30, wherein the plurality of first electrode plates and the plurality of second electrode plates are stacked in a width direction of the first cover plate and/or the second cover plate.

32. The method for manufacturing the battery cell according to any one of claims 28 to 31, wherein the electrode assembly further comprises a plurality of separators, disposed between the first electrode plates and the second electrode plates adjacent to each other, and a ratio of a sum D of thicknesses of the plurality of stacked first electrode plates, second electrode plates, and separators to the width W of the first cover plate and/or the second cover plate satisfies: $0.9 \leq D/W \leq 1$.

33. The battery cell according to any one of claims 28 to 32, wherein a difference between a length of each first electrode plate and a length of each second electrode plate is greater than or equal to 0.1 mm; and/or,
a difference between a width of each first electrode plate and a width of each second electrode plate is greater than or equal to 0.1 mm.

34. The battery cell according to any one of claims 28 to 33, wherein the difference between the length of each first electrode plate and the length of each second electrode plate is greater than or equal to 0.5 mm and less than or equal to 1 mm; and/or, the difference between the width of each first electrode plate and the width of each second electrode plate is greater than or equal to 0.5 mm and less than or equal to 1 mm.

35. A battery, comprising: a case; and the battery cell according to any one of claims 28 to 34, the battery cell being accommodated in the case.

**36.** An electric device, comprising: the battery according to claim 35, the battery being configured to supply electric energy to the electric device.

10

FIG. 1

20    214
      214b
   214a
21         212
        213
23
221a         222a
           22
          211

FIG. 2

FIG. 3

<u>300</u>

| | |
|---|---|
| Connect first ends of a plurality of first electrode plates to a first fixing member | ∿ S310 |
| Connect first ends of a plurality of second electrode plates to a second fixing member | ∿ S320 |
| Oppositely and fixedly arrange the first fixing member and the second fixing member | ∿ S330 |
| Stack the plurality of first electrode plates and the plurality of second electrode plates in a staggered manner by sequentially placing second ends of the plurality of first electrode plates and second ends of the plurality of second electrode plates | ∿ S340 |

FIG. 4

FIG. 5

FIG. 6

FIG. 7

400

| Acquire a plurality of stacked first electrode plates, where first ends of the plurality of first electrode plates are flush, and a surface on which the first end of each of the plurality of first electrode plates is located is a first empty foil region not coated with a first active material | S410 |
|---|---|
| Integrally connect the first ends of the plurality of first electrode plates to a first fixing member | S420 |
| Acquire a plurality of stacked second electrode plates, where first ends of the plurality of second electrode plates are flush, and a surface on which the first end of each of the plurality of second electrode plates is located is a second empty foil region not coated with a second active material | S430 |
| Integrally connect the first ends of the plurality of second electrode plates to a second fixing member | S440 |
| Oppositely and fixedly arrange the first fixing member and the second fixing member | S450 |
| Stack the plurality of first electrode plates and the plurality of second electrode plates in a staggered manner by sequentially placing second ends of the plurality of first electrode plates and second ends of the plurality of second electrode plates | S460 |

FIG. 8

2212    221    2211

(a)

2212    221    2211
2202            2201
                2203

(b)

FIG. 9

221    2202
       2203    2212
       2201
W1
201    2211    W2

FIG. 10

2222

222

2221

(a)

2222

222

2221

2205

2204

2206

(b)

FIG. 11

500

```
┌─────────────────────────────────────────────────────────────────┐
│ Acquire a plurality of stacked first electrode plates, where      │
│ first ends of the plurality of first electrode plates are flush,  │      S510
│ and a surface on which the first end of each of the plurality of  │  ⌇
│ first electrode plates is located is a first empty foil region    │
│ not coated with a first active material                            │
└─────────────────────────────────────────────────────────────────┘
                              │
┌─────────────────────────────────────────────────────────────────┐
│ Cut the first empty foil regions of the plurality of first        │      S520
│ electrode plates to form tabs of the plurality of first           │  ⌇
│ electrode plates                                                   │
└─────────────────────────────────────────────────────────────────┘
                              │
┌─────────────────────────────────────────────────────────────────┐
│ Integrally connect the tabs of the plurality of first electrode   │      S530
│ plates to a first fixing member                                    │  ⌇
└─────────────────────────────────────────────────────────────────┘
                              │
┌─────────────────────────────────────────────────────────────────┐
│ Acquire a plurality of stacked second electrode plates, where     │
│ first ends of the plurality of second electrode plates are flush, │      S540
│ and a surface on which the first end of each of the plurality of  │  ⌇
│ second electrode plates is located is a second empty foil region  │
│ not coated with a second active material                           │
└─────────────────────────────────────────────────────────────────┘
                              │
┌─────────────────────────────────────────────────────────────────┐
│ Cut the first empty foil regions of the plurality of second       │      S550
│ electrode plates to form tabs of the plurality of second          │  ⌇
│ electrode plates                                                   │
└─────────────────────────────────────────────────────────────────┘
                              │
┌─────────────────────────────────────────────────────────────────┐
│ Integrally connect the tabs of the plurality of second electrode  │      S560
│ plates to a second fixing member                                   │  ⌇
└─────────────────────────────────────────────────────────────────┘
                              │
┌─────────────────────────────────────────────────────────────────┐
│ Oppositely and fixedly arrange the first fixing member and the    │      S570
│ second fixing member                                               │  ⌇
└─────────────────────────────────────────────────────────────────┘
                              │
┌─────────────────────────────────────────────────────────────────┐
│ Stack the plurality of first electrode plates and the plurality   │
│ of second electrode plates in a staggered manner by sequentially  │      S580
│ placing second ends of the plurality of first electrode plates    │  ⌇
│ and second ends of the plurality of second electrode plates        │
└─────────────────────────────────────────────────────────────────┘
```

FIG. 12

<u>600</u>

| | |
|---|---|
| Acquire a plurality of stacked first electrode plate groups, where each first electrode plate group includes two first electrode plates which are adjacently arranged, first ends of the two first electrode plates are located on a middle region of each first electrode plate group, and the middle region is a first empty foil region not coated with a first active material | S610 |
| Integrally connect the middle regions of the plurality of first electrode plate groups to a first fixing member | S620 |
| Acquire a plurality of stacked second electrode plate groups, where each second electrode plate group includes two second electrode plates which are adjacently arranged, first ends of the two second electrode plates are located on a middle region of each second electrode plate group, and the middle region is a second empty foil region not coated with a second active material | S630 |
| Integrally connect the middle regions of the plurality of second electrode plate groups to a second fixing member | S640 |
| Oppositely and fixedly arrange the first fixing member and the second fixing member | S650 |
| Stack the plurality of first electrode plates and the plurality of second electrode plates in a staggered manner by sequentially placing second ends of the plurality of first electrode plates and second ends of the plurality of second electrode plates | S660 |

FIG. 13

FIG. 14

FIG. 15

222g

2205
2222
222 | 222 | 2205
2221 | 2221 | 2222
2204 | 2204

(a)

222g

222 | 222
2222 | 2222
2221 | 2221
2205 | 2205
2204 | 2204
2206 | 2206

(b)

FIG. 16

700

| Connect first ends of a plurality of first electrode plates to a first fixing member | S710 |

| Connect first ends of a plurality of second electrode plates to a second fixing member | S720 |

| Oppositely and fixedly arrange the first fixing member and the second fixing member | S730 |

| Acquire a plurality of separators | S740 |

| Stack the plurality of first electrode plates, the plurality of second electrode plates, and the plurality of separators in a staggered manner by sequentially placing second ends of the plurality of first electrode plates, second ends of the plurality of second electrode plates, and the plurality of separators | S750 |

FIG. 17

FIG. 18

FIG. 19

201/202

2141/2142

(a)

201/202

2141/2142

2131/2132

2151/2152

2141/2142

(b)

FIG. 20

800

| | |
|---|---|
| Stack a plurality of first electrode plates and a plurality of second electrode plates in a staggered manner | S810 |
| Hot-press the plurality of stacked first electrode plates and second electrode plates to form an electrical assembly, where the electrical assembly includes a first fixing member, the plurality of first electrode plates, the plurality of second electrode plates, and a second fixing member which are connected | S820 |
| Acquire a housing | S830 |
| Accommodate the electrical assembly into the housing | S840 |

FIG. 21

FIG. 22

FIG. 23

20

102

2141

2122

222
221
} 22

2121

FIG. 24

## INTERNATIONAL SEARCH REPORT

| International application No. |
| --- |
| **PCT/CN2023/138668** |

| A. | CLASSIFICATION OF SUBJECT MATTER |
| --- | --- |

H01M10/0585(2010.01)i; H01M10/0525(2010.01)i

According to International Patent Classification (IPC) or to both national classification and IPC

| B. | FIELDS SEARCHED |
| --- | --- |

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT: 电极, 集流, 正极, 负极, 阳极, 阴极, 极片, 叠, 交替, 交错, 周期, 顺序, 间隔, 错位, 弯, 折, 拐, 角, 损, 坏, 伤, 破, cathode, positive, electrode?, collect+, laminat+, stack+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 109716573 A (SAMSUNG SDI CO., LTD.) 03 May 2019 (2019-05-03) description, paragraphs [0002]-[0102], and figures 1-13 | 1-36 |
| X | CN 102414872 A (ZHANG CHUNJIE et al.) 11 April 2012 (2012-04-11) description, paragraphs [0002]-[0075], and figures 1(a)-6(b) | 1-36 |
| X | US 2012321931 A1 (AHN CHANG-BUM et al.) 20 December 2012 (2012-12-20) description, paragraphs [0002]-[0089], and figures 1-7 | 1-36 |
| X | JP 2012190567 A (SEKISUI CHEMICAL CO., LTD.) 04 October 2012 (2012-10-04) description, paragraphs [0002]-[0046], and figures 1-4 | 1-36 |
| X | JP 2012190566 A (SEKISUI CHEMICAL CO., LTD.) 04 October 2012 (2012-10-04) description, paragraphs [0002]-[0046], and figures 1-4 | 1-36 |
| A | CN 111653818 A (SHANGHAI LANJUN NEW ENERGY TECHNOLOGY CO., LTD.) 11 September 2020 (2020-09-11) entire document | 1-36 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 February 2024** | **04 March 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | | International application No.<br>**PCT/CN2023/138668** | | |

| Patent document<br>cited in search report | | | Publication date<br>(day/month/year) | Patent family member(s) | | | Publication date<br>(day/month/year) |
|---|---|---|---|---|---|---|---|
| CN | 109716573 | A | 03 May 2019 | EP | 3518332 | A1 | 31 July 2019 |
| | | | | EP | 3518332 | A4 | 29 April 2020 |
| | | | | US | 2019214670 | A1 | 11 July 2019 |
| | | | | US | 11637309 | B2 | 25 April 2023 |
| | | | | KR | 20180031443 | A | 28 March 2018 |
| | | | | KR | 102260835 | B1 | 03 June 2021 |
| | | | | WO | 2018056557 | A1 | 29 March 2018 |
| CN | 102414872 | A | 11 April 2012 | WO | 2010104688 | A1 | 16 September 2010 |
| | | | | CA | 2754617 | A1 | 16 September 2010 |
| | | | | CA | 2754617 | C | 21 January 2014 |
| | | | | US | 2010227211 | A1 | 09 September 2010 |
| | | | | US | 8163421 | B2 | 24 April 2012 |
| | | | | JP | 2012519949 | A | 30 August 2012 |
| | | | | JP | 5528481 | B2 | 25 June 2014 |
| | | | | KR | 20110131265 | A | 06 December 2011 |
| | | | | EP | 2406840 | A1 | 18 January 2012 |
| | | | | EP | 2406840 | A4 | 01 March 2017 |
| | | | | US | 2012177985 | A1 | 12 July 2012 |
| | | | | KR | 20140053382 | A | 07 May 2014 |
| | | | | KR | 101507126 | B1 | 07 April 2015 |
| US | 2012321931 | A1 | 20 December 2012 | KR | 20120138465 | A | 26 December 2012 |
| | | | | KR | 101303432 | B1 | 05 September 2013 |
| JP | 2012190567 | A | 04 October 2012 | None | | | |
| JP | 2012190566 | A | 04 October 2012 | None | | | |
| CN | 111653818 | A | 11 September 2020 | CN | 212113913 | U | 08 December 2020 |
| | | | | WO | 2021258694 | A1 | 30 December 2021 |
| | | | | EP | 4156354 | A1 | 29 March 2023 |
| | | | | US | 2023361355 | A1 | 09 November 2023 |

Form PCT/ISA/210 (patent family annex) (July 2022)

**REFERENCES CITED IN THE DESCRIPTION**

**Patent documents cited in the description**

- CN 202310534595